# EUROPEAN PATENT APPLICATION

(11) **EP 4 489 482 A1**
(43) Date of publication of application: **08.01.2025**
(21) Application number: 22934831.3
(22) Date of filing: 21.11.2022
(51) Int. Cl.: H04W 56/00

(54) **COMMUNICATION METHOD AND APPARATUS**

(30) Priority: 26.03.2022 CN 202210308223
(71) Applicant: Huawei Technologies Co., Ltd., Shenzhen, Guangdong 518129 (CN)
(72) Inventor: GAO, Guojuan, Shenzhen, Guangdong 518129 (CN); LI, Hancheng, Shenzhen, Guangdong 518129 (CN); ZHU, Qianghua, Shenzhen, Guangdong 518129 (CN); ZHOU, Han, Shenzhen, Guangdong 518129 (CN)
(74) Representative: Pfenning, Meinig & Partner mbB
(86) International application number: PCT/CN2022/133168
(87) International publication number: WO 2023/185013

(57) **Abstract**

This application relates to the field of communication technologies, and provides a communication method and an apparatus. A first device receives a first message for requesting a time synchronization service for a terminal device. The first device determines first information based on subscription information of the terminal device, and determines a third device configured to provide the time synchronization service, and sends the first information to the third device. The subscription information includes at least one of indication information, one or more types of time source, or one or more clock accuracies, the first information includes a first type and/or a first clock accuracy, the one or more types include the first type, and the one or more clock accuracies include the first clock accuracy. In embodiments of this application, the third device that provides the time synchronization service is selected based on the subscription information of the terminal device, and reference information of the time synchronization service is determined, so that the third device can provide a proper time synchronization service for the terminal device based on the first information.

## Description

### CROSS-REFERENCE TO RELATED APPLICATIONS

This application claims priority to Chinese Patent Application No. 202210308223.9, filed with the China National Intellectual Property Administration on March 26, 2022 and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

Currently, a 5th generation mobile communication system (5th generation mobile communication system, 5GS) supports a time synchronization function. For example, the 5GS may be used as a time source to provide a time synchronization service for a user equipment (user equipment, UE). An access network device or a user plane function device in the 5GS constructs a time synchronization packet, and sends the time synchronization packet to the UE, so that the 5GS performs time synchronization for the UE. Further, after receiving the time synchronization packet from the access network device or the user plane function device, the UE may send the time synchronization packet to an end device connected to the UE, so that the 5GS provides the time synchronization service for the end device. However, different UEs in the vertical industry may have different requirements for a time synchronization service. Therefore, how to provide a proper time synchronization service for a UE is a technical problem that needs to be urgently resolved.

### SUMMARY

Embodiments of this application provide a communication method and an apparatus, to select a proper time source and provide a proper time synchronization service for a terminal device.

According to a first aspect, this application provides a communication method. The method may be performed by a first device, or may be performed by another device including a function of the first device, or may be performed by a chip system or another functional module, where the chip system or the functional module can implement the function of the first device, and the chip system or the functional module is, for example, disposed in the first device. Optionally, the first device is, for example, a time-sensitive communication and time synchronization function device. The method includes: The first device receives a first message from a second device, where the first message is for requesting a time synchronization service for a terminal device; the first device determines first information based on subscription information of the terminal device, and determines a third device configured to provide the time synchronization service, where the subscription information includes at least one of indication information, one or more types of time source, or one or more clock accuracies, the indication information indicates that the terminal device supports the time synchronization service, the first information includes a first type and/or a first clock accuracy, the one or more types include the first type, and the one or more clock accuracies include the first clock accuracy; and the first device sends the first information to the third device, where the first information is reference information of the time synchronization service.

In embodiments of this application, in response to the first message of the second device, the first device selects the third device that provides the time synchronization service, and determines the reference information of the time synchronization service based on the subscription information of the terminal device. Because the third device that provides the time synchronization service and the first information used when the time synchronization service is provided are determined based on the subscription information of the terminal device, the first device can select the third device and the first information that match the subscription information of the terminal device, so that the third device provides a proper time synchronization service for the terminal device based on the first information.

In an optional implementation, the first message may include second information, the second information is requested information about the time synchronization service, the second information includes the first type and/or the first clock accuracy; and that the first device determines, based on subscription information of the terminal device, first information and a third device configured to provide the time synchronization service may be: The first device determines the third device and determines the first information based on the subscription information and the second information. In this manner, the first device can select the third device and the first information that match the subscription information of the terminal device and match the requested information about the time synchronization service, so that a proper time source that provides the time synchronization service can be selected for the terminal device.

In an optional implementation, that the first device determines first information based on subscription information of the terminal device, and determines a third device configured to provide the time synchronization service may be: The first device determines the third device and determines the first information based on the subscription information and time source capability information, where the time source capability information includes at least one of the following information: a type of time source and/or a clock accuracy corresponding to a grandmaster clock, a type of time source and/or a clock accuracy supported by an access network device, or a type of time source and/or a clock accuracy supported by a user plane function device. In this manner, the first device can select the third device and the first information that match the subscription information of the terminal device and match the time source capability information, so that a proper time source that provides the time synchronization service can be selected for the terminal device when a time source capability is met.

In an optional implementation, the method may further include: The first device sends a first request message to a unified data management device, where the first request message is for requesting the subscription information; and the first device receives a first response message from the unified data management device, where the first response message includes the subscription information. In this manner, the first device can obtain the subscription information of the terminal device.

In an optional implementation, the method may further include: The first device sends the first information to a policy control function device. In this manner, the first device sends the first information to the policy control function device, so that based on the first information, the policy control function device provides different charging policies for the time synchronization service based on different time source types and different clock accuracies, and provides differentiated charging services for the terminal device. In this way, flexibility of the charging service is improved, to match an actual situation of the terminal device.

In an optional implementation, the method may further include: The first device receives a second message from the second device, where the second message is for requesting to stop the time synchronization service; and the first device sends a third message to the third device, where the third message indicates to stop the time synchronization service. In this manner, the time synchronization service for the terminal device can be stopped.

In an optional implementation, the method may further include: The first device receives a second request message from an application function device, where the second request message is for requesting the time source capability information; and the first device sends a second response message to the application function device, where the second response message includes the time source capability information. The time source capability information includes at least one of the following information: the type of time source and/or the clock accuracy corresponding to the grandmaster clock, the type of time source and/or the clock accuracy supported by the access network device, or the type of time source and/or the clock accuracy supported by the user plane function device. In this manner, the first device can send the time source capability information to the second device, so that the second device can initiate, based on the time source capability information, a clock service request that matches the time source capability.

In an optional implementation, the subscription information further includes first clock holdover capability information to which the terminal device subscribes, and the first information further includes the first clock holdover capability information; or the subscription information further includes first coordinated universal time divergence capability information to which the terminal device subscribes, and the first information further includes the first coordinated universal time divergence capability information. The first clock holdover capability information indicates that, when a first time source is unavailable, the terminal device supports receiving a time synchronization service of a second time source in first duration. The first coordinated universal time divergence capability information indicates that, when the first time source cannot provide a time source tracing service, the terminal device supports receiving a time synchronization service with a divergence from coordinated universal time provided by a third time source in second duration. The first time source is a time source configured for the terminal device, and the second time source and the third time source are time sources in a communication system in which the first device is located. In this manner, the first device can select the third device to provide a clock holdover service or a time synchronization service with a divergence from coordinated universal time for the terminal device.

In an optional implementation, the method may further include: The first device sends the first information to the second device. In this manner, the first device can send the determined first information to the second device.

According to a second aspect, this application provides a communication method. The method may be performed by a second device, or may be performed by another device including a function of the second device, or may be performed by a chip system or another functional module, where the chip system or the functional module can implement the function of the second device, and the chip system or the functional module is, for example, disposed in the second device. Optionally, the second device is, for example, an application function device or a terminal device. The method includes: sending a first message to a first device, where the first message is for requesting a time synchronization service for the terminal device; and receiving first information from the first device, where the first information is reference information of the time synchronization service, the first information includes a first type and/or a first clock accuracy, the first information is information determined based on subscription information of the terminal device, the subscription information includes at least one of indication information, one or more types of time source, or one or more clock accuracies, the indication information indicates that the terminal device supports the time synchronization service, the one or more types include the first type, and the one or more clock accuracies include the first clock accuracy.

In an optional implementation, the first message includes second information, the second information is requested information about the time synchronization service, the second information includes the first type and/or the first clock accuracy, and the first information is information determined based on the subscription information and the second information.

In an optional implementation, the first information is information determined based on the subscription information and time source capability information, the time source capability information includes at least one of the following information: a type of time source and/or a clock accuracy corresponding to a grandmaster clock, a type of time source and/or a clock accuracy supported by an access network device, or a type of time source and/or a clock accuracy supported by a user plane function device.

In an optional implementation, the method may further include: sending a second message to the first device, where the second message is for requesting to stop the time synchronization service.

In an optional implementation, the method may further include: sending a second request message to the first device, where the second request message is for requesting the time source capability information; and receiving a second response message from the first device, where the second response message includes the time source capability information. The time source capability information includes at least one of the following information: the type of time source and/or the clock accuracy corresponding to the grandmaster clock, the type of time source and/or the clock accuracy supported by the access network device, or the type of time source and/or the clock accuracy supported by the user plane function device.

In an optional implementation, the subscription information further includes first clock holdover capability information to which the terminal device subscribes, and the first information further includes the first clock holdover capability information; or the subscription information further includes first coordinated universal time divergence capability information to which the terminal device subscribes, and the first information further includes the first coordinated universal time divergence capability information. The first clock holdover capability information indicates that, when a first time source is unavailable, the terminal device supports receiving a time synchronization service of a second time source in first duration. The first coordinated universal time divergence capability information indicates that, when the first time source cannot provide a time source tracing service, the terminal device supports receiving a time synchronization service with a divergence from coordinated universal time provided by a third time source in second duration. The first time source is a time source configured for the terminal device, and the second time source and the third time source are time sources in a communication system in which the first device is located.

For technical effects of the second aspect or the implementations, refer to the descriptions of the technical effects of the first aspect or the corresponding implementations.

According to a third aspect, this application provides a communication method. The method may be performed by a third device, or may be performed by another device including a function of the third device, or may be performed by a chip system or another functional module, where the chip system or the functional module can implement the function of the third device, and the chip system or the functional module is, for example, disposed in the third device. Optionally, the third device is, for example, an access network device or a user plane function device. The method includes: receiving first information from a first device, where the first information includes a first type and/or a first clock accuracy, the first information is information determined based on subscription information of a terminal device, the subscription information includes at least one of indication information, one or more types of time source, or one or more clock accuracies, the indication information indicates that the terminal device supports a time synchronization service, the one or more types include the first type, and the one or more clock accuracies include the first clock accuracy; and providing the time synchronization service for the terminal device based on the first information.

In an optional implementation, the first information is information determined based on the subscription information and second information, the second information is requested information about the time synchronization service, and the second information includes the first type and/or the first clock accuracy.

In an optional implementation, the first information is information determined based on the subscription information and time source capability information, the time source capability information includes at least one of the following information: a type of time source and/or a clock accuracy corresponding to a grandmaster clock, a type of time source and/or a clock accuracy supported by an access network device, or a type of time source and/or a clock accuracy supported by a user plane function device.

In an optional implementation, the method may further include: receiving a third message sent by the first device; and stopping the time synchronization service based on the third message.

In an optional implementation, the subscription information further includes first clock holdover capability information to which the terminal device subscribes, and the first information further includes the first clock holdover capability information; or the subscription information further includes first coordinated universal time divergence capability information to which the terminal device subscribes, and the first information further includes the first coordinated universal time divergence capability information. The first clock holdover capability information indicates that, when a first time source is unavailable, the terminal device supports receiving a time synchronization service of a second time source in first duration. The first coordinated universal time divergence capability information indicates that, when the first time source cannot provide a time source tracing service, the terminal device supports receiving a time synchronization service with a divergence from coordinated universal time provided by a third time source in second duration. The first time source is a time source configured for the terminal device, and the second time source and the third time source are time sources in a communication system in which the first device is located.

For technical effects of the third aspect or the implementations, refer to the descriptions of the technical effects of the first aspect or the corresponding implementations.

According to a fourth aspect, this application provides a communication apparatus. The communication apparatus may be the first device according to any one of the first aspect to the third aspect. The communication apparatus has the function of the first device. For example, the communication apparatus is the first device, a larger device including the first device, or a functional module in the first device, for example, a baseband apparatus or a chip system. In an optional implementation, the communication apparatus includes the baseband apparatus and a radio frequency apparatus. In another optional implementation, the communication apparatus includes a processing module (also referred to as a processing unit sometimes) and a transceiver module (also referred to as a transceiver unit sometimes). The transceiver module can implement a sending function and a receiving function. When the transceiver module implements the sending function, the transceiver module may be referred to as a sending module (also referred to as a sending unit sometimes). When the transceiver module implements the receiving function, the transceiver module may be referred to as a receiving module (also referred to as a receiving unit sometimes). The sending module and the receiving module may be a same functional module, the functional module is referred to as the transceiver unit, and the functional module can implement the sending function and the receiving function. Alternatively, the sending module and the receiving module may be different functional modules, and the transceiver module is a general term for these functional modules. Optionally, the first device is, for example, a time-sensitive communication and time synchronization function device.

For example, the transceiver module (or the receiving module) is configured to receive a first message from a second device, where the first message is for requesting a time synchronization service for a terminal device. The processing module is configured to: determine first information based on subscription information of the terminal device, and a third device configured to provide the time synchronization service, where the subscription information includes at least one of indication information, one or more types of time source, or one or more clock accuracies, the indication information indicates that the terminal device supports the time synchronization service, the first information includes a first type and/or a first clock accuracy, the one or more types include the first type, and the one or more clock accuracies include the first clock accuracy. The transceiver module (or the sending module) is further configured to send the first information to the third device, where the first information is reference information of the time synchronization service.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the first device according to any one of the first aspect to the third aspect.

According to a fifth aspect, this application provides a communication apparatus. The communication apparatus may be the second device according to any one of the first aspect to the third aspect. The communication apparatus has the function of the second device. For example, the communication apparatus is the second device, a larger device including the second device, or a functional module in the second device, for example, a baseband apparatus or a chip system. In an optional implementation, the communication apparatus includes the baseband apparatus and a radio frequency apparatus. In another optional implementation, the communication apparatus includes a processing module (also referred to as a processing unit sometimes) and a transceiver module (also referred to as a transceiver unit sometimes). The transceiver module can implement a sending function and a receiving function. When the transceiver module implements the sending function, the transceiver module may be referred to as a sending module (also referred to as a sending unit sometimes). When the transceiver module implements the receiving function, the transceiver module may be referred to as a receiving module (also referred to as a receiving unit sometimes). The sending module and the receiving module may be a same functional module, the functional module is referred to as the transceiver unit, and the functional module can implement the sending function and the receiving function. Alternatively, the sending module and the receiving module may be different functional modules, and the transceiver module is a general term for these functional modules. Optionally, the second device is, for example, an application function device or a terminal device.

For example, the transceiver module (or the sending module) is configured to send a first message to a first device, where the first message is for requesting a time synchronization service for the terminal device. The transceiver module (or the receiving module) is further configured to receive first information from the first device, where the first information is reference information of the time synchronization service, the first information includes a first type and/or a first clock accuracy, the first information is information determined based on subscription information of the terminal device, the subscription information includes at least one of indication information, one or more types of time source, or one or more clock accuracies, the indication information indicates that the terminal device supports the time synchronization service, the one or more types include the first type, and the one or more clock accuracies include the first clock accuracy.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the second device according to any one of the first aspect to the third aspect.

According to a sixth aspect, this application provides a communication apparatus. The communication apparatus may be the third device according to any one of the first aspect to the third aspect. The communication apparatus has the function of the third device. For example, the communication apparatus is the third device, a larger device including the third device, or a functional module in the third device, for example, a baseband apparatus or a chip system. In an optional implementation, the communication apparatus includes the baseband apparatus and a radio frequency apparatus. In another optional implementation, the communication apparatus includes a processing module (also referred to as a processing unit sometimes) and a transceiver module (also referred to as a transceiver unit sometimes). The transceiver module can implement a sending function and a receiving function. When the transceiver module implements the sending function, the transceiver module may be referred to as a sending module (also referred to as a sending unit sometimes). When the transceiver module implements the receiving function, the transceiver module may be referred to as a receiving module (also referred to as a receiving unit sometimes). The sending module and the receiving module may be a same functional module, the functional module is referred to as the transceiver unit, and the functional module can implement the sending function and the receiving function. Alternatively, the sending module and the receiving module may be different functional modules, and the transceiver module is a general term for these functional modules. Optionally, the third device is, for example, an access network device or a user plane function device.

For example, the transceiver module (or the receiving module) is configured to receive first information from a first device, where the first information includes a first type and/or a first clock accuracy, the first information is information determined based on subscription information of a terminal device, the subscription information includes at least one of indication information, one or more types of time source, or one or more clock accuracies, the indication information indicates that the terminal device supports a time synchronization service, the one or more types include the first type, and the one or more clock accuracies include the first clock accuracy. The processing module is configured to provide the time synchronization service for the terminal device based on the first information.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the third device according to any one of the first aspect to the third aspect.

According to a seventh aspect, this application provides a communication system. The communication system includes the communication apparatus according to the fourth aspect and/or the communication apparatus according to the sixth aspect.

According to an eighth aspect, this application provides a computer-readable storage medium. The computer-readable storage medium is configured to store a computer program or instructions. When the computer program or the instructions are run, the method performed by the first device, the second device, or the third device in the foregoing aspects is implemented.

According to a ninth aspect, this application provides a computer program product including instructions. When the computer program product runs on a computer, the methods according to the foregoing aspects are implemented.

According to a tenth aspect, this application provides a chip system including a processor and an interface. The processor is configured to invoke instructions from the interface and run the instructions, so that the chip system implements the methods according to the foregoing aspects.

### BRIEF DESCRIPTION OF DRAWINGS

FIG. 1 is a diagram of an architecture of a 5G network;
FIG. 2 is a diagram of an architecture of a 5G network that can support a TSC service;
FIG. 3 is a schematic diagram in which a 5GS supports providing a time synchronization service for an end device;
FIG. 4 is a schematic flowchart of a communication method according to an embodiment of this application;
FIG. 5A and FIG. 5B are another schematic flowchart of a communication method according to an embodiment of this application;
FIG. 6A and FIG. 6B are still another schematic flowchart of a communication method according to an embodiment of this application;
FIG. 7 is a schematic diagram of a structure of a communication apparatus according to an embodiment of this application; and
FIG. 8 is a schematic diagram of a structure of a communication apparatus according to an embodiment of this application.

### DESCRIPTION OF EMBODIMENTS

To make objectives, technical solutions, and advantages of embodiments of this application clearer, the following first explains and describes some terms in embodiments of this application.
(1) In embodiments of this application, unless otherwise specified, a quantity of nouns represents "a singular noun or a plural noun", that is, "one or more". "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one item (piece) of a, b, or c indicates a, b, c, a and b, a and c, b and c, or a, b, and c, where a, b, and c may be singular or plural.
(2) Ordinal numbers such as "first" and "second" in embodiments of this application are used to distinguish between a plurality of objects, but are not intended to limit sizes, content, an order, a time sequence, priorities, importance degrees, or the like of the plurality of obj ects. For example, first request information and second request information may be same information, or may be different information. In addition, the names do not indicate that content, sizes, transmitting ends and/or receiving ends, sending time, priorities, or importance degrees of the two pieces of information are different. In addition, step numbers in embodiments described in this application are merely used to distinguish between different steps, but are not used to limit a sequence of the steps. For example, S301 may be performed before S302, may be performed after S302, or may be performed simultaneously with S302.

In embodiments of this application, a network device may include an access network device or a core network device. A communication apparatus configured to implement a function of the network device may be a network device or may be an apparatus, for example, a chip system, that can support the network device in implementing the function, where the apparatus may be installed in the network device. In the technical solutions provided in embodiments of this application, the technical solutions provided in embodiments of this application are described by using an example in which the apparatus configured to implement the function of the network device is the network device. In addition, a communication apparatus configured to implement a function of the terminal device may be a terminal device or may be an apparatus, for example, a chip system, that can support the terminal device in implementing the function, where the apparatus may be installed in the terminal device. In the technical solutions provided in embodiments of this application, the technical solutions provided in embodiments of this application are described by using an example in which the apparatus configured to implement the function of the terminal device is the terminal device.

The following first describes a communication system to which embodiments of this application are applicable.

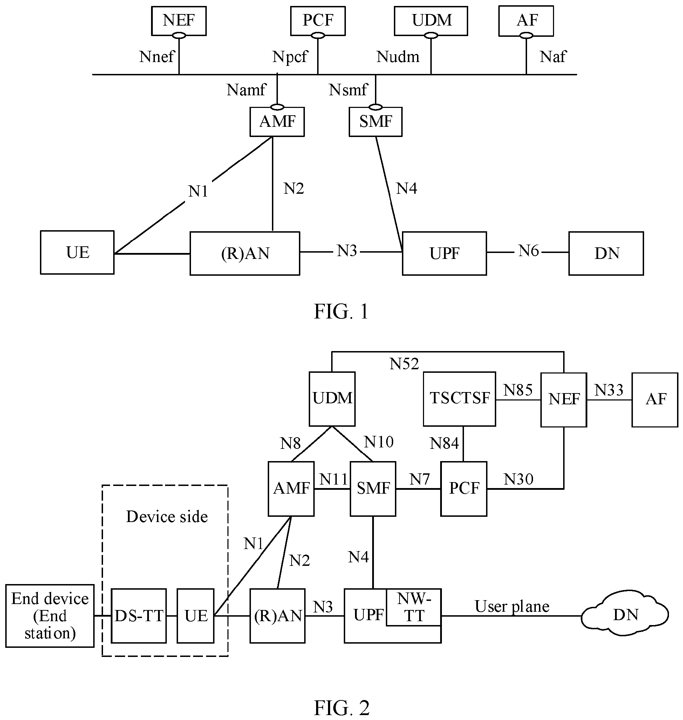

FIG. 1 shows an architecture of a 5G communication system. The architecture of the communication system may include a (radio) access network (a (R)AN in FIG. 1), a terminal device, and a core network. For example, in the architecture of the communication system, the (radio) access network may include an access network element.

In embodiments of this application, the terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect persons, objects, machines, and the like, and may be widely used in various scenarios. For example, the terminal device includes but is not limited to terminal devices in the following scenarios: cellular communication, device-to-device (device-to-device, D2D), vehicle to everything (vehicle to everything, V2X), machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), a smart furniture, a smart office, a smart wearable, smart transportation, a smart city (smart city), an unmanned aerial vehicle, a robot, and the like. The terminal device may be sometimes referred to as a user equipment (user equipment, UE), a terminal, an access station, a UE station, a remote station, a wireless communication device, a user apparatus, or the like. For ease of description, in embodiments of this application, an example in which the terminal device is a UE is used for description.

The access network element may also be referred to as an access network device, is a device having a wireless transceiver function, and is configured to communicate with the terminal device. The access network element includes but is not limited to a base station (a base transceiver station (base transceiver station, BTS), a NodeB, an eNodeB/eNB, or a gNodeB/gNB), a transceiver point (transmission reception point, TRP), a subsequently evolved base station in the 3rd generation partnership project (3rd generation partnership project, 3GPP), an access node, a wireless relay node, or a wireless backhaul node in a wireless fidelity (wireless fidelity, Wi-Fi) system, and the like. The base station may be a macro base station, a micro base station, a pico base station, a small cell, a relay station, or the like. A plurality of base stations may support networks of a same access technology, or may support networks of different access technologies. The base station may include one or more co-site or non-co-site transmission reception points. The access network element may alternatively be a radio controller, a central unit (central unit, CU), and/or a distributed unit (distributed unit, DU) in a cloud radio access network (cloud radio access network, CRAN) scenario. For example, in a vehicle to everything (vehicle to everything, V2X) technology, the access network element may be a road side unit (road side unit, RSU). The following uses an example in which the access network element is a base station for description. The base station may communicate with the terminal device, or may communicate with the terminal device through a relay station. The terminal device may communicate with a plurality of base stations in different access technologies.

Devices in the core network include but are not limited to devices configured to implement functions such as mobility management, data processing, session management, and policy and charging. By using 5GS as an example, the core network device may include a network exposure function (network exposure function, NEF) network element, a policy control function (policy control function, PCF) network element, a unified data management (unified data management, UDM), an application function (application function, AF) network element, an access and mobility management function (access and mobility management function, AMF) network element, a session management function (session management function, SMF) network element, a user plane function (user plane function, UPF) network element, and the like.

The session management function network element may be configured to be responsible for session management (including session establishment, modification, and release, and maintenance of a tunnel between the user plane function network element and the access network element) of the terminal device, selection and reselection of the user plane function network element, Internet Protocol (internet protocol, IP) address allocation (including optional authorization) of the UE, traffic routing configuration in the user plane function network element, quality of service (quality of service, QoS) control, and the like. The session management function network element is a termination point of a session management part of a non-access stratum (non-access stratum, NAS) message. For example, in a 5G communication system, the session management function network element may be an SMF network element, as shown in FIG. 1; and in a future communication system such as a 6G communication system, the session management function network element may still be the SMF network element, or may have another name. This is not limited in embodiments of this application. When the session management function network element is the SMF network element, the SMF network element may provide an Nsmf service.

The policy control function network element mainly supports providing a unified policy framework to control network behavior and providing policy rules for a network function at a control layer, and is responsible for obtaining user subscription information related to policy decisions. For example, in the 5G communication system, the policy control function network element may be a PCF network element, as shown in FIG. 1; and in future communication, such as the 6G communication system, the policy control function network element may still be the PCF network element, or may have another name. This is not limited in embodiments of this application. When the policy control function network element is the PCF network element, the PCF network element may provide an Npcf service.

The unified data management network element is responsible for management of user identifiers, subscription data, and authentication data, and registration management of serving network elements of a user. For example, in the 5G communication system, the unified data management network element may be a UDM network element, as shown in FIG. 1; and in future communication, such as the 6G communication system, the unified data management network element may still be the UDM network element, or may have another name. This is not limited in embodiments of this application.

In the 5G communication system, the application function network element may be an AF network element, represents an application function of a third party or a carrier, is an interface for obtaining external application data in a 5G network, and is mainly configured to transfer a requirement of an application side for a network side. It should be noted that, in future communication, such as the 6G communication system, the application function network element may still be the AF network element, or may have another name. This is not limited in embodiments of this application.

The user plane function network element, serving as an interface to a data network, implements functions such as user-plane data forwarding, session/flow level-based charging statistics, and bandwidth throttling, that is, packet routing and forwarding, and QoS processing of user plane data. For example, in the 5G communication system, the user plane function network element may be a UPF network element, as shown in FIG. 1; and in future communication, such as the 6G communication system, the user plane function network element may still be the UPF network element, or may have another name. This is not limited in embodiments of this application.

The data network (data network, DN) is a service network that provides a user with a data transmission service, for example, an IP multimedia service (IP multimedia service, IMS) or the Internet (Internet).

The foregoing mainly describes some network elements that may be used in embodiments of this application. In addition, FIG. 1 further relates to another network element. Details are not described herein again.

The network elements in the core network may be network elements implemented on dedicated hardware, may be software instances running on dedicated hardware, or may be instances of virtualization functions on an appropriate platform. For example, the foregoing virtualization platform may be a cloud platform. In addition, the network elements in the core network may also be referred to as function entities or devices. For example, the user plane function network element may also be referred to as a user plane function entity or a user plane function device, the policy control function network element may also be referred to as a policy control function entity or a policy control function device, and the unified data management network element may also be referred to as a unified data management entity or a unified data management device.

In FIG. 1, Nnef, Namf, Npcf, Nsmf, Nudm, Naf, N1, N2, N3, N4, and N6 are sequence numbers of interfaces. For meanings of the interface sequence numbers, refer to meanings defined in a 3GPP standard protocol. This is not limited herein.

It should be understood that, embodiments of this application are not limited to the communication system shown in FIG. 1. Names of the network elements shown in FIG. 1 are merely used as examples for description herein, and are not used as limitations on the network elements included in the architecture of the communication system to which the method in embodiments of this application is applicable. The following describes functions of some network elements or devices in the communication system. Names of devices that implement core network functions in systems of different access technologies may be different. This is not limited in embodiments of this application.

It should be noted that the communication system shown in FIG. 1 does not constitute a limitation on a communication system to which embodiments of this application are applicable. The architecture of the communication system shown in FIG. 1 is a 5G system architecture. Optionally, in addition to being applied to a 5G system, the technical solution provided in embodiments of this application may further be applied to a 4th generation mobile communication technology (4th generation, 4G) system, for example, an LTE system; or may be applied to a next-generation mobile communication system or another similar communication system. This is not specifically limited.

It should be noted that the architecture of the communication system shown in FIG. 1 is not limited to including only the network elements shown in the figure, and may further include another device not shown in the figure. Details are not described herein one by one.

It should be noted that a distribution form of the network elements is not limited in embodiments of this application. The distribution form shown in FIG. 1 is merely an example, and is not limited in this application.

Embodiments of this application relate to a scenario in which a mobile communication system supports a time-sensitive communication (time sensitive communication, TSC) service.

FIG. 2 is a diagram of a system architecture in which a 5GS supports a TSC service. In this architecture, a time-sensitive communication and time synchronization function (time sensitive communication and time synchronization function, TSCTSF) network element (or referred to as a time-sensitive communication and time synchronization function entity or a time-sensitive communication and time synchronization function device) is added, and the network element can enable a TSC service in a non-time-sensitive network (time sensitive network, TSN) scenario. A TSN translator (translator) is added on both UPF and UE sides to adapt to user plane data transmission, for example, conversion of a time synchronization packet. The UPF-side TSN translator is, for example, a network-side TSN translator (network-side TSN translator, NW-TT) in FIG. 2, and the UE-side TSN translator is, for example, a device-side TSN translator (device-side TSN translator, DS-TT) in FIG. 2. The DS-TT may be located in the UE, or may be located outside the UE. This is not limited in this embodiment of this application. The NW-TT is generally located in the UPF, but this is not limited in this embodiment of this application. In addition, if the DS-TT is located outside the UE, the DS-TT may belong to a 5GS in which the UE is located, or may not belong to the 5GS in which the UE is located, or may partially belong to the 5GS in which the UE is located. This is not limited in this embodiment of this application. In FIG. 2, an example in which the DS-TT is located outside the UE, and the DS-TT partially belongs to the 5GS is used.

For example, functions of the TSCTSF network element may include but are not limited to the following functions: associating a time synchronization service request from the AF with an AF session (AF session); exchanging a port management information container (port management information container, PMIC) with the DS-TT, exchanging a user plane node management information container (user plane node management information container, UMIC) with the NW-TT, and managing and controlling the DS-TT/NW-TT; detecting availability of a 5GS bridge or 5GS node information reported by the PCF; creating a TSC assistance container (TSC assistance container) based on a service type parameter provided by the AF/NEF and providing the container to the PCF; and determining a 5GS bridge delay (5GS bridge delay) based on UE-DS-TT residence time (DS-TT residence time) and providing the 5GS bridge delay to the PCF. The UE-DS-TT residence time is, for example, duration of arriving at an egress of the UE from an ingress of the DS-TT.

In the architecture shown in FIG. 2, the UE may be connected to and communicate with an end device (end station). The end device and the UE belong to different communication systems. For example, the end device is not a device in a 5GS in which the UE is located, or the end device and the UE belong to different 5GSs. The end device may be, for example, a terminal device. However, a specific implementation of the end device is not limited in embodiments of this application.

For some network elements in FIG. 2, refer to the foregoing descriptions of FIG. 1.

For ease of description, the network elements shown in FIG. 1 or FIG. 2 are subsequently used as examples for description in embodiments of this application, and an XX network element is directly referred to as XX for short. For example, the UPF network element is referred to as a UPF for short, the PCF network element is referred to as a PCF for short, the AF network element is referred to as an AF for short, the TSCTSF network element is referred to as a TSCTSF for short, and the UDM network element is referred to as a UDM for short. It should be understood that, names of all the network elements in embodiments of this application are merely used as examples, and may also be referred to as other names in future communication, or the network elements in embodiments of this application may be replaced by another entity or device that has a same function in future communication. This is not limited in embodiments of this application. Unified descriptions are provided herein, and details are not described below again.

It should be understood that, for meanings of interface sequence numbers in FIG. 2, refer to meanings defined in the 3GPP standard protocol. This is not limited herein.

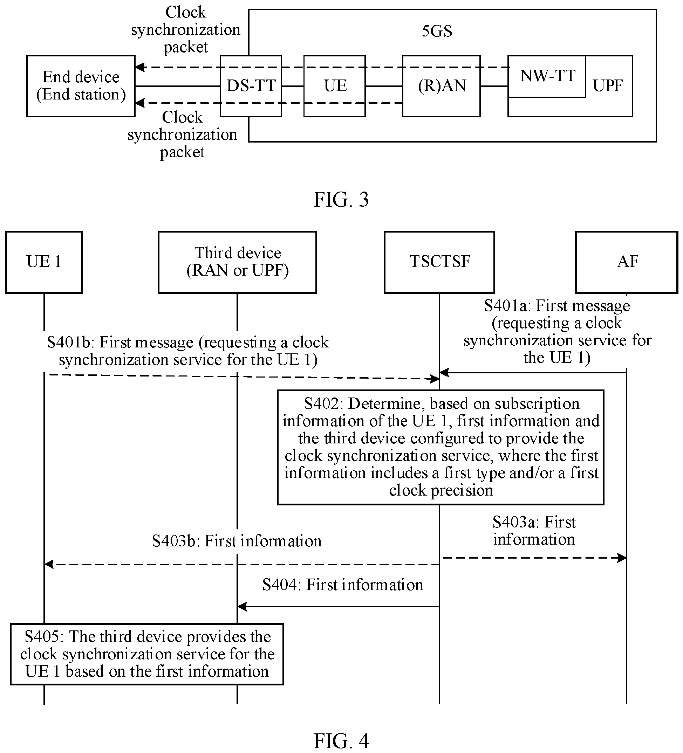

For the architecture shown in FIG. 2, the 5GS may be used as a time source to provide a time synchronization service for the UE. For example, an access network device or a user plane function device in the 5GS constructs a time synchronization packet, and sends the time synchronization packet to the UE, so that the 5GS provides the time synchronization service for the UE. Further, after receiving the time synchronization packet from the access network device or the user plane function device, the UE may send the time synchronization packet to an end device, so that the 5GS provides the time synchronization service for the end device, as shown in FIG. 3. A dashed line in FIG. 3 represents a transmission direction of the time synchronization packet. However, UEs in the vertical industry may have different requirements for the time synchronization service. Therefore, how to provide a proper time synchronization service for a UE is a technical problem that needs to be urgently resolved.

In view of this, embodiments of this application provide a communication method and an apparatus. The communication method includes: A first device receives a first message from a second device, where the first message is for requesting a time synchronization service for a terminal device (and/or an end device); in response to the first message, the first device determines first information based on subscription information of the terminal device, and determines a third device configured to provide the time synchronization service, and sends the first information to the third device, where the first information is reference information used when the time synchronization service is provided for the terminal device. The subscription information may include at least one of indication information, one or more types of time source, or one or more clock accuracies, the indication information indicates that the terminal device supports the time synchronization service, the first information includes a first type and/or a first clock accuracy, the one or more types include the first type, and the one or more clock accuracies include the first clock accuracy. The 5GS may support deployment of time sources of a plurality of types and a plurality of clock accuracies. In this embodiment of this application, the first device can select a third device that matches the subscription information of the terminal device and that is configured to provide the time synchronization service, and determine a type of time source and a clock accuracy that match the subscription information of the terminal device, so that a proper time source can be determined, to provide a proper time synchronization service for the terminal device.

To better describe embodiments of this application, the following describes the method provided in embodiments of this application with reference to the accompanying drawings. In the accompanying drawings corresponding to embodiments of this application, all optional steps are represented by dashed lines. All methods provided in embodiments of this application may be applied to the network architecture shown in FIG. 2. For example, the first device in this embodiment of this application may be a time-sensitive communication and time synchronization function device, and the time-sensitive communication and time synchronization function device may be the TSCTSF in FIG. 2. The second device in this embodiment of this application may be an application function device, a terminal device, or an end device. The application function device may be the AF in FIG. 2, the terminal device may be the UE in FIG. 2 or the DS-TT in FIG. 2, and the end device may be the end device in FIG. 2. The third device in this embodiment of this application may be an access network device, a user plane function device, or the like. This is not limited in this embodiment of this application. The access network device may be the (R)AN in FIG. 2, and the user plane function device may be the UPF in FIG. 2. A unified data management device in this embodiment of this application may be the UDM in FIG. 2. A policy control device in this embodiment of this application may be the PCF in FIG. 2.

For ease of description, in the following embodiments, the access network device may be replaced with a RAN, the user plane function network element may be replaced with a UPF, the application function device may be replaced with an AF, the unified data management device may be replaced with a UDM, the time-sensitive communication and time synchronization function device may be replaced with a TSCTSF, and the policy control device may be replaced with a PCF.

It should be noted that, in this embodiment of this application, a target device for which the 5GS, as the time source, provides the time synchronization service may be the end device in FIG. 2 or the UE in FIG. 2. For ease of understanding embodiments of this application, in the following embodiments, an example in which the target device is the UE in FIG. 2 is used for description. Further, for ease of differentiation, in the following embodiments, the UE in FIG. 2 is replaced with a UE 1, and an end device connected to the UE 1 is replaced with a UE 2. The UE 1 communicates with the UE 2 through the DS-TT. In addition, the DS-TT may be located in the UE 1, or may be located outside the UE 1. This is not limited in embodiments of this application. Unless specifically described, in the following embodiments, that the DS-TT is located in the UE 1 is used as an example. In addition, in the following embodiments, an example in which the terminal device is the UE 1 is used for description.

FIG. 4 is a flowchart of a communication method according to an embodiment of this application.

S401: A second device sends a first message to a TSCTSF; and correspondingly, the TSCTSF receives the first message. The second device is the AF, the UE 1, the UE 2, or the DS-TT. However, in this embodiment of this application, an example in which the second device is the AF or the UE 1 is used for description. Correspondingly, step S401 may be represented as: S401a: The AF sends a first message to the TSCTSF, and the TSCTSF receives the first message; or may be represented as: S401b: The UE 1 sends a first message to the TSCTSF, and the TSCTSF receives the first message.

The first message may be used for requesting a time synchronization service for the UE 1. For example, the first message may be used for requesting a 5GS or a future communication system such as a 6GS to provide the time synchronization service for the UE 1. Because the UE 1 may send a time synchronization packet to the UE 2 through the DS-TT, to implement time synchronization of the UE 2, the first message may alternatively be understood as being used for requesting the 5GS to provide the time synchronization service for the UE 2. For ease of understanding, in the following embodiments, an example in which the first message is for requesting the 5GS to provide the time synchronization service for the UE 1 is used for description.

Optionally, the time synchronization service may include a timing resiliency (timing resiliency) service. For example, the first message may be used for requesting the 5GS to provide the timing resiliency service for the UE 1. The timing resiliency service may be understood as an auxiliary time synchronization service. To be specific, the 5GS serves as an auxiliary time source to cooperate with and/or assist a first time source to provide the time synchronization service for the UE 1. The first time source is a time source configured for (or used by) the UE 1. The timing resiliency service in this embodiment of this application relates to two capabilities: a clock holdover capability, and a coordinated universal time (universal time coordinated, UTC) divergence capability. However, it should be understood that, a specific capability of the timing resiliency service in this embodiment of this application is not limited thereto.

The clock holdover capability may provide a clock holdover service for the UE 1, and may be understood as that: If the first time source is unavailable (for example, is faulty), the 5GS may provide a time synchronization service with a specific clock accuracy for the UE 1 for a period of time. The UTC divergence capability may be understood as that: If the first time source cannot provide a time source tracing service for the UE 1, the 5GS may provide a clock service with a divergence from UTC and with a specific clock accuracy for the UE 1 for a period of time.

In an example, the first message may include second information. The second information may be requested information about the time synchronization service, or requirement information of the time synchronization service, for example, includes one or more types of time source, includes one or more clock accuracies, or includes one or more types of time source and one or more clock accuracies. For example, the second information may include a first type, may include a first clock accuracy, or may include a first type and a first clock accuracy. It is clear that, the second information may alternatively include another type of time source and another clock accuracy. This is not limited in this embodiment of this application.

The type of time source may include but is not limited to one or more of the following types: an atomic clock, a network time protocol (network time protocol, NTP) server, a global navigation satellite system (global navigation satellite system, GNSS), fiber synchronization, a terrestrial beacon system (terrestrial beacon system, TBS), or the like. The clock accuracy may include but is not limited to one or more of the following clock accuracies: seconds, milliseconds, microseconds, nanoseconds, and the like.

Optionally, the second information may further include indication information of a third device, to indicate an expected device configured to provide the time synchronization service for the UE 1, for example, indicate a RAN, indicate a UPF, or indicate a RAN and a UPF.

In another example, the first message may include third information. The third information may be requested information about the timing resiliency service or requirement information of the timing resiliency service, for example, includes expected clock holdover capability information, expected UTC divergence capability information, or expected clock holdover capability information and expected UTC divergence capability information. Optionally, the third information may further include indication information of a third device, to indicate an expected device configured to provide the timing resiliency service for the UE 1, for example, indicate a RAN, indicate a UPF, or indicate a RAN and a UPF.

The expected clock holdover capability information may include third duration, and the third duration is duration in which the 5GS is expected to provide the time synchronization service for the UE 1 when the first time source of the UE 1 is unavailable. In addition, the expected clock retention capability information may alternatively include a second type and/or a second clock accuracy, or may include another type of time source and another clock accuracy. This is not limited in this embodiment of this application. For example, the expected clock holdover capability information includes the third duration, the second type, and the second clock accuracy. In this case, the expected clock holdover capability information may be understood as that: When the first time source is unavailable, the 5GS is expected to provide a time synchronization service of the second type with the second clock accuracy for the UE 1 in the third duration.

The expected UTC divergence capability information may include fourth duration, and/or a parameter related to a divergence from UTC, such as a maximum divergence from UTC. The fourth duration is duration in which the 5GS provides a time synchronization service with the divergence from UTC for the UE 1 when the first time source cannot provide the time source tracing service for the UE 1. In addition, the expected UTC divergence capability information may alternatively include a third type and/or a third clock accuracy, or may include another type of time source and another clock accuracy. This is not limited in this embodiment of this application. For example, the expected UTC divergence capability information includes the fourth duration, the third type, and the third clock accuracy. The expected UTC divergence capability information may be understood as that: When the first time source cannot provide the time source tracing service for the UE 1, the 5GS is expected to provide a time synchronization service of the third type with the divergence from UTC with the third clock accuracy for the UE 1 in the fourth duration.

In still another example, the first message may include the second information and the third information. For the second information and the third information, refer to the foregoing descriptions. Details are not described herein again. It should be understood that, the expected clock holdover capability information may include the type of time source, or may not include the type of time source. If the expected clock holdover capability information does not include the type of time source, it may be understood as that the second device requests the 5GS to serve as a time source of the first type to provide the clock holdover service for the UE 1, or it may be understood as that the second device requests the 5GS to serve as a time source of any type or a time source of a default type to provide the clock holdover service for the UE 1. If the expected clock holdover capability information includes the type of time source, for example, includes the second type, it may be understood as that the second device requests the 5GS to serve as a time source of the second type to provide the clock holdover service for the UE 1. Similarly, the expected clock holdover capability information may include the clock accuracy, or may not include the clock accuracy. If the expected clock holdover capability information does not include the clock accuracy, it may be understood as that the second device requests the 5GS to provide a clock holdover service with a second clock accuracy for the UE 1, or it may be understood as that the second device requests the 5GS to provide a clock holdover service with any clock accuracy or a default clock accuracy for the UE 1. If the expected clock holdover capability information includes the clock accuracy, for example, includes the second clock accuracy, it may be understood as that the second device requests the 5GS to provide a clock holdover service with the second clock accuracy for the UE 1. Similarly, the expected UTC divergence capability information may include the type of time source, or may not include the type of time source; and the expected UTC divergence capability information may include the clock accuracy, or may not include the clock accuracy. For details, refer to related descriptions of the expected clock holdover capability information. Details are not described herein again.

It should be noted that, the clock holdover capability information involved in the following embodiments may include but is not limited to one or more of the following information: one or more types of time source, one or more clock accuracies, duration information, or the like. The UTC divergence capability information involved in the following embodiments may include but is not limited to one or more of the following information: one or more types of time source, a clock accuracy, duration information, or information related to the divergence from UTC such as the maximum divergence from UTC.

In S401, the second device may be the AF or may be the UE 1. The following separately describes specific implementation processes in which the AF sends the first message to the TSCTSF and the UE 1 sends the first message to the TSCTSF.
(1) The AF sends the first message to the TSCTSF, and the TSCTSF receives the first message.

In this embodiment of this application, the AF may send the first message to the TSCTSF. The first message may be, for example, a time synchronization service request message or a timing resiliency service request message. A specific implementation form of the first message is not limited in this embodiment of this application. Specifically, the AF may send the first message to an NEF, and the NEF forwards the first message to the TSCTSF. Optionally, the AF may determine that the UE 1 has a requirement for the 5GS to provide the time synchronization service, and may send the first message to the TSCTSF based on the requirement. For example, the AF may determine, based on slice information of the UE 1, a service requirement of the UE 1, and the like, that the UE 1 has the requirement for the 5GS to provide the time synchronization service. The slice information may include, for example, a data network name (data network name, DNN) and single network slice selection assistance information (single network slice selection assistance information, S-NSSAI). However, this is not limited in this embodiment of this application.

In an example, the AF may send a second request message to the TSCTSF, and the TSCTSF receives the second request message. The second request message is for requesting time source capability information, for example, requesting to obtain time source capability information of the 5GS. Specifically, the AF may send the second request message to the NEF, and the NEF forwards the second request message to the TSCTSF. Further, the TSCTSF may send a second response message to the AF, and the AF receives the second response message, where the second response message includes the time source capability information. Specifically, the TSCTSF sends the second response message to the NEF, and the NEF sends the second request message to the AF. In this example, the AF can obtain the time source capability information of the 5GS, and request the time synchronization service based on the time source capability information.

The time source capability information may include one or more of the following information: time source information of a grandmaster clock (grandmaster, GM), time source information of a RAN, or time source information of a UPF. The grandmaster clock may include, for example, one or more clocks in the 5GS whose clock performance (for example, a type of time source or a clock accuracy) meets a first threshold, or a clock in the 5GS whose clock performance is optimal. For example, the grandmaster clock may be a clock provided by the RAN, or a clock provided by the UPF, or a clock provided by an external device (for example, a device that belongs to a communication system different from the TSCTSF), or an optimal clock provided and selected by at least two devices of the RAN, the UPF, and the external device. A specific implementation form of the grandmaster clock is not limited in this embodiment of this application.

The time source information of the grandmaster clock may include but is not limited to one or more of the following information: a type of time source corresponding to the grandmaster clock, a clock accuracy corresponding to the grandmaster clock, whether the grandmaster clock has a clock holdover capability, clock holdover capability information, whether the grandmaster clock has a UTC divergence capability, and UTC divergence information. The time source information of the RAN may include but is not limited to one or more of the following information: a type of time source supported by the RAN, a clock accuracy supported by the RAN, whether the RAN has a clock holdover capability, clock holdover capability information, whether the RAN has a UTC divergence capability, and UTC divergence information. The time source information of the UPF may include but is not limited to one or more of the following information: a type of time source supported by the UPF, a clock accuracy supported by the UPF, whether the UPF has a clock holdover capability, clock holdover capability information, whether the UPF has a UTC divergence capability, and UTC divergence information.

Table 1 shows an example of the time source capability information. As shown in Table 1, the type of time source corresponding to the grandmaster clock is an atomic clock, the clock accuracy corresponding to the grandmaster clock is second, and the grandmaster clock has neither a clock holdover capability nor a UTC divergence capability. The type of time source supported by the RAN includes an NTP server and a GNSS, the clock accuracy supported by the RAN includes second and millisecond, the RAN has a clock holdover capability but does not have a UTC divergence capability, and the clock holdover capability information of the RAN includes the GNSS, millisecond, and duration 1. In other words, the RAN may provide a GNSS clock holdover service with a clock accuracy of millisecond for the UE 1 within the duration 1. A type of time source supported by the UPF includes fiber synchronization and a TBS, a clock accuracy supported by the UPF includes millisecond and microsecond, the UPF has a UTC divergence capability but does not have a clock holdover capability, and the UTC divergence capability information of the UPF includes the TBS, microsecond, duration 2, and a maximum divergence from UTC. In other words, the UPF may provide, based on the maximum divergence from UTC, a TBS time synchronization service with a divergence from UTC and with a clock accuracy of microsecond for the UE 1 within the duration 2. It should be understood that, data in Table 1 is merely an example, and does not limit the time source capability information.

**Table 1**

| | Time source information of the grandmaster clock | Time source information of the RAN | Time source information of the UPF |
|---|---|---|---|
| Type of time source | Atomic clock | NTP server, GNSS | Fiber synchronization, TBS |
| Clock accuracy | Second | Second, millisecond | Millisecond, microsecond |
| Whether a clock holdover capability is supported | No | Yes | No |
| Clock holdover capability information | | GNSS, millisecond, duration 1 | |
| Whether a UTC divergence capability is supported | No | No | Yes |
| UTC divergence capability information | | | TBS, microsecond, duration 2, maximum divergence from UTC |

In an example, the TSCTSF may determine (or collect) the time source capability information. For example, the TSCTSF may receive the time source information of the grandmaster clock reported by the RAN. A specific implementation process in which the TSCTSF collects the time source information of the grandmaster clock is not limited in this embodiment of this application. For another example, the TSCTSF may receive the time source information of the RAN from the RAN. The time source information of the RAN may be information actively reported by the RAN to the TSCTSF, or may be information sent by the RAN to the TSCTSF in response to a request message that is for obtaining the time source information of the RAN and that is from the TSCESF. A specific implementation process in which the TSCTSF collects the time source information of the RAN is not limited in this embodiment of this application. For another example, the TSCTSF may receive the time source information of the UPF from the UPF. The time source information of the UPF may be information actively reported by the UPF to the TSCTSF, or may be information sent by the UPF to the TSCTSF in response to a request message that is for obtaining the time source information of the UPF and that is from the TSCESF. A specific implementation process in which the TSCTSF collects the time source information of the UPF is not limited in this embodiment of this application.

(2) The UE 1 sends the first message to the TSCTSF, and the TSCTSF receives the first message.

In this embodiment of this application, the UE 1 may send the first message to the TSCTSF. The first message may be, for example, a session establishment request message 1, a time synchronization service request message or a timing resiliency service request message. A specific implementation form of the first message is not limited in this embodiment of this application. For example, that the UE 1 sends the first message to the TSCTSF may be that: The UE 1 sends the first message to the RAN, the RAN forwards the first message to the SMF, and the SMF forwards the first message to the TSCTSF. It should be understood that, a specific transmission process of the first message is not limited in this embodiment of this application. The session establishment request message 1 may be used for requesting to establish a time synchronization service session between the UE 1 and the TSCTSF.

Optionally, the UE 1 may determine that the UE 1 has a requirement for the 5GS to provide the time synchronization service, and may send the first message to the TSCTSF based on the requirement. For example, the UE 1 may determine, based on slice information, a service requirement, and the like, that the UE 1 has a requirement for the 5GS to provide the synchronization service.

In an example, the first message may include subscription information of the UE 1. For example, the UE 1 may obtain the subscription information of the UE 1 in a registration process. The subscription information may include one or more of the following information: indication information, one or more types of time source to which the UE 1 subscribes, or one or more clock accuracies to which the UE 1 subscribes. For example, the subscription information of the UE 1 may include a first type, or a first clock accuracy, or include a first type and a first clock accuracy. The one or more types of time source to which the UE 1 subscribes include the first type, and the one or more clock accuracies to which the UE 1 subscribes include the first clock accuracy. The indication information indicates whether the UE 1 supports the time synchronization service provided by the 5GS, or indicate whether the UE 1 subscribes to the time synchronization service provided by the 5GS. In this embodiment of this application, an example in which the indication information indicates that the UE 1 supports (or has subscribed to) the time synchronization service provided by the 5GS is used. For the type of time source and the clock accuracy, refer to the foregoing descriptions. Details are not described herein again.

In another example, the subscription information of the UE 1 may further include clock holdover capability information to which the UE 1 subscribes, or include UTC divergence capability information to which the UE 1 subscribes. For example, the clock holdover capability information to which the UE 1 subscribes includes first clock holdover capability information. The UTC divergence capability information to which the UE 1 subscribes may include first UTC divergence capability information.

The first clock holdover capability information may be understood as that: When a first time source is unavailable, the UE 1 supports receiving a time synchronization service of a second time source within first duration. The second time source is a time source in a communication system in which the TSCTSF is located, that is, the second time source is a time source provided by the 5GS. A type of the second time source may be the first type, or may be another type. This is not limited in this embodiment of this application. A clock accuracy of the second time source may be the first clock accuracy, or may be another clock accuracy. This is not limited in this embodiment of this application.

The first UTC divergence capability information may be understood as that when the first time source cannot provide a time source tracing service for the UE 1, the UE 1 supports receiving a time synchronization service with a divergence from UTC provided by a third time source. The third time source is a time source in a communication system in which the TSCTSF is located, that is, the third time source is a time source provided by the 5GS. A type of the third time source may be the first type, or may be another type. This is not limited in this embodiment of this application. A clock accuracy of the third time source may be the first clock accuracy, or may be another clock accuracy. This is not limited in this embodiment of this application.

In addition, for the clock holdover capability information and the UTC divergence capability information, refer to the foregoing descriptions. Details are not described herein again.

Optionally, the indication information may further indicate whether the UE 1 supports a 5GS clock holdover capability, or indicate whether the UE 1 supports a 5GS UTC divergence capability, or indicate whether the UE 1 supports a 5GS clock holdover capability and a 5GS UTC divergence capability. It should be understood that, in this embodiment of this application, other information than the indication information may indicate whether the UE 1 supports the 5GS clock holdover capability and/or indicate whether the UE 1 supports the 5GS UTC divergence capability. In addition, whether the UE 1 supports the 5GS clock holdover capability may be understood as whether the UE 1 subscribes to the 5GS clock holdover capability. If the UE 1 does not support the 5GS clock holdover capability, the UE 1 does not subscribe to the 5GS clock holdover capability; otherwise, the UE 1 has subscribed to the 5GS clock holdover capability. Similarly, whether the UE 1 supports the 5GS UTC divergence capability may be understood as whether the UE 1 subscribes to the 5GS UTC divergence capability. If the UE 1 supports the 5GS UTC divergence capability, the UE 1 has subscribed to the 5GS UTC divergence capability; otherwise, the UE 1 does not subscribe to the 5GS UTC divergence capability.

Table 2 shows an example of the subscription information of the UE 1. As shown in Table 2, the indication information indicates that the UE 1 supports the time synchronization service provided by the 5GS; a type of time source to which the UE 1 subscribes includes an atomic clock, an NTP server, a GNSS, fiber synchronization, and a TBS; a clock accuracy to which the UE 1 subscribes includes second, millisecond, and microsecond; and the UE 1 has subscribed to the 5GS clock holdover capability, and the clock holdover capability information to which the UE 1 subscribes includes GNSS, millisecond, and duration 1. In other words, when the first time source is unavailable, the UE 1 supports receiving a GNSS time synchronization service with a clock accuracy of millisecond within the duration 1. The UE 1 has subscribed to the UTC divergence capability, and the UTC divergence capability information to which the UE 1 subscribes includes a TBS, microsecond, and duration 2. In other words, when the first time source cannot provide the time source tracing service for the UE 1, the UE 1 supports receiving a TBS time synchronization service with a divergence from UTC and with the clock accuracy of microsecond within the duration 2. It should be understood that, data in Table 2 is merely an example, and does not limit the subscription information of the UE 1.

**Table 2**

| Indication information | Indicate that the UE 1 supports the time synchronization service provided by the 5GS |
|---|---|
| Type of time source | Atomic clock, NTP server, GNSS, fiber synchronization, and TBS |
| Clock accuracy | Second, millisecond, microsecond |
| Whether the clock holdover capability is subscribed to | Yes |
| Clock holdover capability information | GNSS, millisecond, duration 1 |
| Whether the UTC divergence capability is subscribed to | Yes |
| UTC divergence capability information | TBS, microsecond, duration 2 |

Optionally, the subscription information of the UE 1 may further include indication information of a device configured to provide the time synchronization service for the UE 1, for example, indication information indicating a RAN, indicating a UPF, or indicating a RAN and a UPF.

It should be understood that, if the second device is the UE 1, the first message may include one or more of the subscription information of the UE 1, second information, and third information. For details, refer to the foregoing related descriptions. Details are not described herein again.

In another possible implementation, the second device may be the UE 2. Correspondingly, step S401 may be that: The UE 2 sends the first message to the TSCTSF, and the TSCTSF receives the first message from the UE 2. In this case, the first message may be used for requesting the 5GS to provide a time synchronization service for the UE 2. For example, the UE 2 may determine, based on a service requirement and the like, that the UE 2 has a requirement for the 5GS to provide the time synchronization service, and may send the first message to the TSCTSF based on the requirement. For example, the UE 2 may send the first message to the UE 1, and then UE 1 sends the first message to the TSCTSF. If the UE 1 does not include the DS-TT, that is, the DS-TT is located outside the UE 1, the UE 2 may send the first message to the DS-TT, the DS-TT forwards the first message to the UE 1, and then the UE 1 sends the first message to the TSCTSF. For a specific implementation process in which the UE 1 sends the first message to the TSCTSF, refer to the foregoing descriptions. Details are not described herein again. It should be understood that, the first message may alternatively carry information about the requirement of the UE 2 for the time synchronization service and/or information about a requirement of the UE 2 for a timing resiliency synchronization service; or after receiving the first message from the UE 2, the UE 1 carries the information about the requirement of the UE 2 for the time synchronization service and/or the information about the requirement of the UE 2 for the timing resiliency synchronization service in the first message based on the service requirement of the UE 2, and sends the first message carrying the requirement information to the TSCTSF.

In another possible implementation, the second device may alternatively be the DS-TT. For example, the DS-TT is located outside the UE, and the DS-TT may send the first message to the TSCTSF. For a specific implementation process in which the DS-TT sends the first message to the TSCTSF, refer to the specific implementation process in which the UE 1 sends the first message to the TSCTSF. Details are not described herein again.

S402: The TSCTSF determines first information based on the subscription information of the UE 1, and determines a third device configured to provide the time synchronization service.

The TSCTSF receives the first message, and as a response, the TSCTSF may determine, for the UE 1, reference information used when the time synchronization service is provided for the UE 1, mark the reference information as the first information, select a device configured to provide the time synchronization service, and mark the device as the third device. The third device is a RAN or a UPF. The first information may include a first type, or include a first clock accuracy, or include a first type and a first clock accuracy. The first information may be understood as reference information of the time synchronization service. In addition, the first information may also be referred to as time source information, time synchronization information, time synchronization service information, or the like. A name of the first information is not limited in this embodiment of this application.

In an example, the TSCTSF may determine the third device and determine the first information based on the subscription information of the UE 1. For example, the TSCTSF may determine the subscription information of the UE 1, and after receiving the first message, determine the third device and determine the first information based on the subscription information of the UE 1. The subscription information of the UE 1 includes the first information. For example, the subscription information of the UE 1 includes the first type and/or the first clock accuracy. For details, refer to the foregoing descriptions, and details are not described herein again. The TSCTSF may select, from the subscription information of the UE 1, a subscription parameter (for example, a type of time source or a clock accuracy) related to the time synchronization service as the first information, and select a RAN or a UPF as the third device based on the subscription information of the UE 1. For example, the TSCTSF may select one type of time source from one or more types of time source to which the UE 1 subscribes, and one clock accuracy from one or more clock accuracies to which the UE 1 subscribes as the first information; or may select, based on historical data (such as a type of time source and a clock accuracy of a historical time synchronization service), one type of time source from one or more types of time source to which the UE 1 subscribes, and one clock accuracy from one or more clock accuracies to which the UE 1 subscribes as the first information. This embodiment of this application is not limited thereto. For example, the TSCTSF may select one device as the third device from one or more devices to which the UE 1 subscribes and that are configured to provide the time synchronization service; or may select a RAN or a UPF as the third device based on the first information, resource usage of the RAN, and resource usage of the UPF. However, this embodiment of this application is not limited thereto. For example, if the clock accuracy in the first information is microsecond, resources of the RAN are insufficient, and resources of the UPF are sufficient, the TSCTSF may select the UPF as the third device.

It should be understood that, the first type may be one or more types of time source, and similarly, the first clock accuracy may be one or more clock accuracies of the time source. For ease of understanding, this embodiment of this application is described by using an example in which the first type is one type of time source, and the first clock accuracy is one clock accuracy of the time source.

In the foregoing example, because the third device configured to provide the time synchronization service for the UE 1 and the reference information (namely, the first information) of the time synchronization service are determined by the TSCTSF based on the subscription information of the UE 1, the TSCTSF can select a proper third device and proper first information for the UE 1, so that the third device can subsequently provide a proper time synchronization service for the UE 1 based on the first information.

In addition, that the TSCTSF determines the subscription information of the UE 1 may be specifically: The TSCTSF may obtain the subscription information of the UE 1 from the UDM; or the first message includes the subscription information of the UE 1, and after receiving the first message, the TSCTSF parses the first message to obtain the subscription information of the UE 1. For example, the TSCTSF may send a first request message to the UDM, where the first request message is for requesting the subscription information of the UE 1. The UDM receives the first request message, and sends a first response message to the TSCTSF, where the first response message includes the subscription information of the UE 1. The TSCTSF receives the first response message, and parses the first response message to obtain the subscription information of the UE 1. For another example, the UDM may actively send the subscription information of the UE 1 to the TSCTSF. Correspondingly, the TSCTSF receives the subscription information of the UE 1 from the UDM.

Optionally, if the subscription information of the UE 1 includes the first clock holdover capability information, the first information may further include the first clock holdover capability information; or if the subscription information of the UE 1 includes the first UTC divergence capability information, the first information may further include the first UTC divergence capability information. For the first clock holdover capability information and the first UTC divergence capability information, refer to the foregoing descriptions. Details are not described herein again.

In an example, the TSCTSF may determine the third device and determine the first information based on the subscription information of the UE 1 and the first message. For example, if the first message includes second information, the TSCTSF may determine the third device and determine the first information based on the subscription information of the UE 1 and the second information. Specifically, the TSCTSF may select the third device and select the first information and that are suitable for (or match) the second information from the subscription information of the UE 1. For example, if the second information includes the first type and the first clock accuracy, and the subscription information of the UE 1 also includes the first type and the first clock accuracy, the TSCTSF may determine that the first information includes the first type and the first clock accuracy. For another example, if the second information includes indication information indicating that the RAN provides a time synchronization service, and the subscription information of the UE 1 also includes indication information indicating that the RAN provides a time synchronization service, the TSCTSF may determine that the RAN is the third device. For the second information, refer to the foregoing descriptions. Details are not described herein again.

For another example, if the first message includes third information, the TSCTSF may determine the third device and determine the first information based on the subscription information of the UE 1 and the third information. Specifically, the TSCTSF may select the third device and select the first information that are suitable for the third information from the subscription information of the UE 1. For example, if the third information includes the first clock holdover capability information, and the subscription information of the UE 1 also includes the first clock holdover capability information, the TSCTSF may determine that the first information includes the first clock holdover capability information. For another example, if the third information includes indication information indicating that the UPF provides a timing resiliency service, and the subscription information of the UE 1 also includes indication information indicating that the UPF provides a timing resiliency service, the TSCTSF may determine that the UPF is the third device. For the third information, refer to the foregoing descriptions. Details are not described herein again.

It should be understood that, a specific implementation process in which the TSCTSF may determine the third device and the first information based on the subscription information of the UE 1 and the first message is not limited in this embodiment of this application.

In another example, the TSCTSF may determine the third device and determine the first information based on the subscription information of the UE 1 and time source capability information. For the time source capability information, refer to the foregoing descriptions. Details are not described herein again. Specifically, the TSCTSF may select the third device and select the first information that are suitable for the time source capability information of the 5GS from the subscription information of the UE 1. For example, if the time source capability information includes time source information of a grandmaster clock, the time source information of the grandmaster clock includes the first type and the first clock accuracy, and the subscription information of the UE 1 also includes the first type and the first clock accuracy, the TSCTSF may determine a RAN or a UPF as the third device, and determine that the first information includes the first type and the first clock accuracy. For another example, if the time source capability information includes time source information of a RAN, the time source information of the RAN includes the first type and the first clock accuracy, and the subscription information of the UE 1 also includes the first type and the first clock accuracy, the TSCTSF may determine the RAN as the third device, and determine that the first information includes the first type and the first clock accuracy. For still another example, if the time source capability information includes time source information of a UPF, the time source information of the UPF includes the first type and the first clock accuracy, and the subscription information of the UE 1 also includes the first type and the first clock accuracy, the TSCTSF may determine the UPF as the third device, and determine that the first information includes the first type and the first clock accuracy. It should be understood that, a specific implementation process in which the TSCTSF may determine the third device and determine the first information based on the subscription information of the UE 1 and the time source capability information is not limited in this embodiment of this application.

In still another example, the TSCTSF may determine the third device and determine the first information based on the subscription information of the UE 1, the time source capability information, and the first message. For example, if the first message includes second information, the TSCTSF may determine the third device and determine the first information based on the subscription information of the UE 1, the time source capability information, and the first information. For another example, if the first message includes third information, the TSCTSF may determine the third device and determine the first information based on the subscription information of the UE 1, the time source capability information, and the third information. For still another example, if the first message includes second information and third information, the TSCTSF may determine the third device and determine the first information based on the subscription information of the UE 1, the time source capability information, the second information, and the third information. For a specific implementation process in which the TSCTSF determines the third device and determines the first information based on the subscription information of the UE 1, the time source capability information, and the first message, refer to the foregoing descriptions. Details are not described herein again.

In another possible implementation, if the first message carries information about a requirement of the UE 2 for the time synchronization service and/or information about a requirement of the UE 2 for the timing resiliency synchronization service, the TSCTSF may determine the third device and determine the first information based on at least one of the subscription information of the UE 1, the time source capability information, the information about the requirement of the UE 2 for the time synchronization service, and/or the information about the requirement of the UE 2 for the timing resiliency synchronization service. For a specific implementation process, refer to the foregoing descriptions. Details are not described herein again.

S403: The TSCTSF sends the first information to the second device; and correspondingly, the second device receives the first information. The second device in this embodiment of this application is the AF or the UE 1. In other words, step S403 may be represented as: S403a: The TSCTSF sends the first information to the AF, and the AF receives the first information; or S403b: The TSCTSF sends the first information to the UE 1, and the UE 1 receives the first information. For example, the AF sends the first message to the TSCTSF, and the TSCTSF may send the first information to the AF; or the UE 1 sends the first message to the TSCTSF, and the TSCTSF may send the first information to the UE 1.

Step S403 is an optional step. In S403, the TSCTSF may send the first information to the second device. For example, the TSCTSF sends a feedback message of the first message to the second device, where the feedback message carries the first information. It is clear that, the TSCTSF may alternatively send the first information to the second device via another message. This is not limited in this embodiment of this application. The feedback message may be an acknowledgment (acknowledgement, ACK) message or a negative acknowledgment (negative-acknowledgment, NACK) message. For example, if the request of the first message succeeds, the feedback message is the ACK message, to indicate the 5GS to provide the time synchronization service for the UE 1. If the request of the first message fails, for example, the subscription information of the UE 1 does not match the time source capability of the 5GS, or the subscription information of the UE 1 does not match requested information about the time synchronization service, the feedback message is the NACK message, to indicate the 5GS not to provide the time synchronization service for the UE 1. In this embodiment of this application, an example in which the request of the first message succeeds is used.

In S403, if the second device is the AF, that the TSCTSF may send the first information to the second device may be understood as that the TSCTSF sends the first information to an NEF, and then the NEF forwards the first information to the TSCTSF. If the second device is the UE 1, that the TSCTSF sends the first information to the second device may be understood as that the TSCTSF sends the first information to a PCF, the PCF sends the first information to an SMF after receiving the first information, and then the SMF forwards the first information to the UE 1 through an AMF and a RAN. It should be understood that, a transmission process of the first information between the TSCTSF and the UE 1 is not limited in this embodiment of this application.

In another possible implementation, the second device may be the UE 2. Correspondingly, step S403 may be that: The TSCTSF sends the first information to the UE 2, and the UE 2 receives the first information from the TSCTSF. For example, if the second device is the UE 1, the TSCTSF sends the first information to a PCF, the PCF sends the first information to an SMF after receiving the first information, the SMF forwards the first information to the UE 1 through an AMF and a RAN, and then the UE 1 forwards the first information to the UE 2. If the DS-TT is located outside the UE 1, after receiving the first information, the UE 2 sends the first information to the DS-TT, and then the DS-TT forwards the first information to the UE 2. It should be understood that, a transmission process of the first information between the TSCTSF and the UE 2 is not limited in this embodiment of this application.

In another possible implementation, the second device may be the DS-TT. Correspondingly, step S403 may be that: The TSCTSF sends the first information to the DS-TT, and the DS-TT receives the first information from the TSCTSF. For example, if the second device is the UE 1, the TSCTSF sends the first information to a PCF, the PCF sends the first information to an SMF after receiving the first information, the SMF forwards the first information to the UE 1 through an AMF and a RAN, and then the UE 1 forwards the first information to the DS-TT.

S404: The TSCTSF sends the first information to the third device; and correspondingly, the third device receives the first information.

The first information is reference information of the time synchronization service. In other words, the first information may be used as reference information used when the third device provides the time synchronization service for the UE 1. The third device is a RAN or a UPF. The following separately describes specific implementation processes in which the TSCTSF sends the first information to the RAN and the TSCTSF sends the first information to the UPF.
(1) The TSCTSF sends the first information to the RAN, and correspondingly, the RAN receives the first information.

In this embodiment of this application, the TSCTSF determines that the RAN provides the time synchronization service for the UE 1. Further, the TSCTSF may send the first information to the RAN. For example, if the second device is the AF, the TSCTSF may carry the first information in a session establishment request message 2 and send the session establishment request message 2 to the RAN. Alternatively, it is clear that the TSCTSF may carry the first information in another message and send the message to the RAN. This is not limited in this embodiment of this application. For example, the session establishment request message 2 may be used for establishing a time synchronization service session between the TSCTSF and the RAN. For another example, if the second device is the UE 1, the TSCTSF may carry the first information in a session modification request message and send the session modification request message to the RAN. Alternatively, it is clear that the TSCTSF may carry the first information in another message and send the message to the RAN. This is not limited in this embodiment of this application. For example, the session modification request message may be used for modifying a time synchronization service session between the TSCTSF and the RAN. It should be understood that, a specific implementation form of the first information is not limited in this embodiment of this application.

In addition, that the TSCTSF sends the first information to the RAN may be specifically that: The TSCTSF sends the first information to a PCF, the PCF forwards the first information to an SMF, and then the SMF forwards the first information to the RAN through the AMF. It should be understood that, a transmission process of the first information between the TSCTSF and the RAN is not limited in this embodiment of this application.

(2) The TSCTSF sends the first information to the UPF, and correspondingly, the UPF receives the first information.

In this embodiment of this application, the TSCTSF determines that the UPF provides the time synchronization service for the UE 1. Further, the TSCTSF may send the first information to the UPF. For example, the TSCTSF may carry the first information in a session establishment request message 3 and send the session establishment request message 3 to the UPF. Alternatively, it is clear that the TSCTSF may carry the first information in another message and send the message to the UPF. This is not limited in this embodiment of this application. For example, the session establishment request message 3 may be used for establishing a time synchronization service session between the TSCTSF and the UPF. It should be understood that, a specific implementation form of the first information is not limited in this embodiment of this application.

In addition, that the TSCTSF sends the first information to the UPF may be specifically that: The TSCTSF sends the first information to a PCF, the PCF forwards the first information to an SMF, and then the SMF forwards the first information to the UPF. It should be understood that, a transmission process of the first information between the TSCTSF and the UPF is not limited in this embodiment of this application.

In a possible implementation, the TSCTSF may send the first information to the PCF, and correspondingly, the PCF receives the first information. The first information may be used as reference information for the PCF to provide a charging policy for the time synchronization service. For example, after receiving the first information, the PCF may provide the charging policy of the time synchronization service for the UE 1 based on the first information. In the foregoing implementation, the PCF can provide different charging policies for the UE 1 based on different time source types and different clock accuracies, and can provide differentiated charging services for the UE 1. In this way, flexibility of the charging service is improved, to match an actual situation of the UE 1.

S405: The third device provides the time synchronization service for the UE 1 based on the first information.

After receiving the first information, the third device may provide the time synchronization service for the UE 1 based on the first information.

If the third device is the RAN, that the RAN provides the time synchronization service for the UE 1 based on the first information may be specifically as follows: The RAN generates a time synchronization packet based on the first information, and sends the time synchronization packet to the UE 1 by using an air interface mechanism, so that the 5GS performs time synchronization on the UE 1. Optionally, the RAN may provide the time synchronization service for the UE 1 based on the first information by using an access stratum. It should be understood that, a specific implementation process in which the RAN provides the time synchronization service for the UE 1 based on the first information is not limited in this embodiment of this application.

If the third device is the UPF, that the UPF provides the time synchronization service for the UE 1 based on the first information may be specifically as follows: The UPF and/or an NW-TT inside the UPF generates a time synchronization packet based on the first information, and sends the time synchronization packet to the UE 1, so that the 5GS performs time synchronization on the UE 1. It should be understood that, a specific implementation process in which the UPF provides the time synchronization service for the UE 1 based on the first information is not limited in this embodiment of this application.

In a possible implementation, the UE 1 receives the time synchronization packet from the third device, and the UE 1 may send the time synchronization packet to the UE 2, so that the 5GS provides the time synchronization service for the UE 2. For example, if the first message is used for requesting the time synchronization service for the UE 2, the third device may send the time synchronization packet to the UE 2, or the UE 1 may send the received time synchronization packet to the UE 2 based on the service requirement of the UE 2, or the like. Specifically, the third device generates a time synchronization packet based on the first information, and sends the time synchronization packet to the UE 1. After receiving the time synchronization packet, the UE 1 may forward the time synchronization packet to the UE 2, so that the 5GS provides the time synchronization service for the UE 2. If the UE 1 does not include the DS-TT, that is, the DS-TT is located outside the UE 1, after receiving the time synchronization packet from the third device, the UE 1 may send the time synchronization packet to the DS-TT, and then the DS-TT forwards the time synchronization packet to the UE 2. In addition, if the third device is the UPF, that the UPF sends the time synchronization packet to the UE 2 may be that: The NW-TT included in the UPF sends the time synchronization packet to the DS-TT, and then the DS-TT forwards the time synchronization packet to the UE 2.

In a possible implementation, the second device may send a second message to the TSCTSF, and correspondingly, the TSCTSF receives the second message. The second message is for requesting to stop providing the time synchronization service for the UE 1, for example, requesting the 5GS to stop providing the time synchronization service for the UE 1. For example, the second device determines that the UE 1 does not have a requirement for the 5GS to provide the time synchronization service, and sends the second message to the TSCTSF. For example, the second device may determine, based on slice information, a service requirement, and the like of the UE 1, that the UE 1 does not have the requirement for the 5GS to provide the time synchronization service. It should be understood that, a specific implementation process in which the second device determines that the UE 1 does not have the requirement for the 5GS to provide the time synchronization service is not limited in this embodiment of this application.

Further, after receiving the second message, the TSCTSF may send a third message to the third device. Correspondingly, the third device receives the third message, and stops providing the time synchronization service for the UE 1 based on the third message. The third message indicates to stop providing the time synchronization service for the UE 1. The third message may be a session modification request message or another message. A specific form of the third message is not limited in this embodiment of this application. If the third device is the RAN, the TSCTSF may send the third message to the PCF, the PCF forwards the third message to the SMF, and then the SMF forwards the third message to the RAN through the AMF. If the third device is the UPF, the TSCTSF may send the third message to the PCF, and the PCF forwards the third message to the UPF through the SMF. It should be understood that, a transmission process of the third message between the TSCTSF and the third device is not limited in this embodiment of this application.

Optionally, the TSCTSF may send a fourth message to the PCF, and correspondingly, the PCF receives the fourth message. The fourth message indicates to stop providing a charging policy for the time synchronization service. Further, after receiving the fourth message, the PCF stops, based on the fourth message, providing the charging policy for the time synchronization service of the UE 1. For the fourth message, it should be understood that, the TSCTSF may send the fourth message to the PCF, to indicate the PCF to stop providing the charging policy, or may send another message. This is not limited in this embodiment of this application.

In the foregoing embodiment, in response to the first message, the TSCTSF determines, based on the subscription information of the UE 1, the third device that provides the time synchronization service for the UE 1 and the reference information (namely, the first information) of the time synchronization service, and sends the first information to the third device, so that the third device can provide the time synchronization service for the UE 1 based on the first information. Because the third device that provides the time synchronization service and the reference information of the time synchronization service are determined based on the subscription information of the UE 1, the TSCTSF can select a third device and select first information that match the subscription information of the UE 1, so that the third device can subsequently provide a proper time synchronization service for the UE 1 based on the first information.

The following separately describes the procedure shown in FIG. 4 from a perspective in which the second device is an AF and a perspective in which the second device is a UE 1.

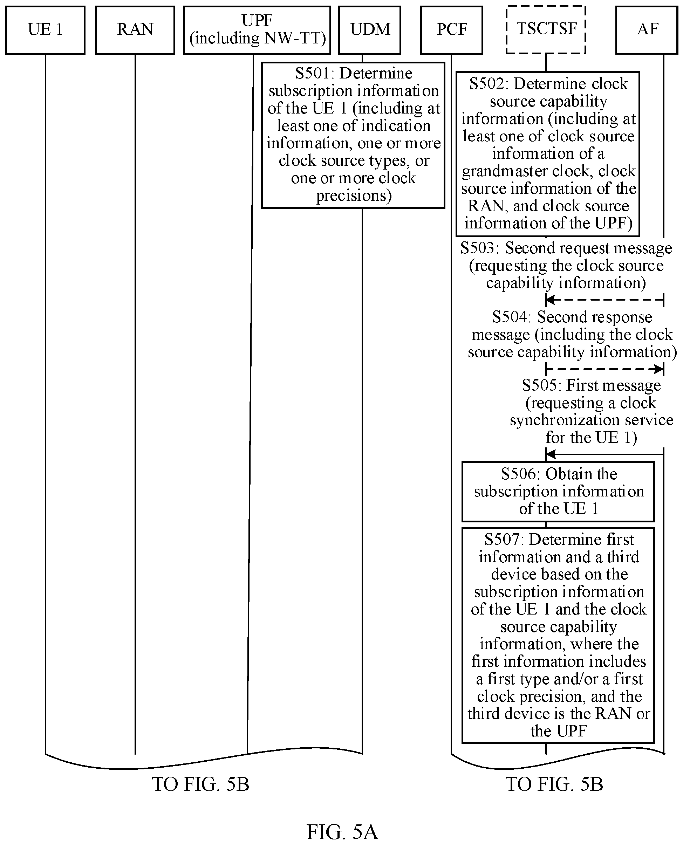

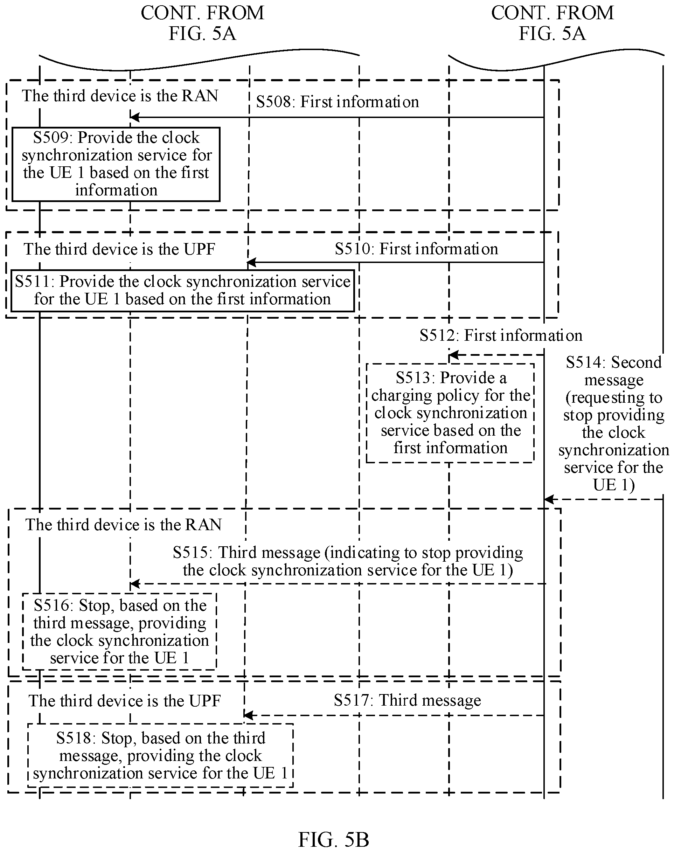

FIG. 5A and FIG. 5B are another flowchart of a communication method according to an embodiment of this application. In the procedure shown in FIG. 5A and FIG. 5B, the second device is an AF, and the first message is used for requesting a time synchronization service for a UE 1.

S501: AUDM determines subscription information of the UE 1.

For example, in a registration process, the UE 1 may subscribe to information related to a time synchronization service provided by the 5GS, so that the UDM can obtain and store the subscription information of the UE 1. The subscription information of the UE 1 may include one or more of the following information: indication information, one or more types of time source to which the UE 1 subscribes, or one or more clock accuracies to which the UE 1 subscribes. Optionally, the subscription information of the UE 1 may further include clock holdover capability information to which the UE 1 subscribes, or UTC divergence capability information to which the UE 1 subscribes. For the subscription information of the UE 1, refer to the related descriptions in step S401. Details are not described herein again.

S502: A TSCTSF determines time source capability information.

The time source capability information may include one or more of time source information of a grandmaster clock, time source information of a RAN, or time source information of a UPF. For example, the TSCTSF may receive the time source information of the grandmaster clock reported by the RAN. For example, the TSCTSF may receive the time source information of the RAN reported by the RAN. For another example, the TSCTSF may alternatively receive the time source information of the UPF reported by the UPF. For a specific implementation process of S502, refer to the related descriptions in S401. Details are not described herein again.

S503: The AF sends a second request message to the TSCTSF, and correspondingly, the TSCTSF receives the second request message.

S504: The TSCTSF sends a second response message to the AF, and correspondingly, the AF receives the second response message.

The foregoing S503 and S504 are optional steps. The second request message may be used for requesting the time source capability information. The second response message includes the time source capability information.

S505: The AF sends a first message to the TSCTSF, and correspondingly, the TSCTSF receives the first message.

The first message is for requesting the time synchronization service for the UE 1, for example, requesting the 5GS to provide the time synchronization service for the UE 1. For example, the AF determines, based on slice information, a service requirement, and the like of the UE 1, that the UE 1 has a requirement for the 5GS to provide the time synchronization service, and the AF sends the first message to the TSCTSF based on the requirement. For a specific implementation process of S505, refer to the related descriptions in S401. Details are not described herein again.

S506: The TSCTSF obtains the subscription information of the UE 1.

For example, the TSCTSF may obtain the subscription information of the UE 1 from the UDM; or the first message includes the subscription information of the UE 1, and TSCTSF obtains the subscription information of the UE 1 from the first message. For a specific implementation process of S506, refer to the related descriptions in FIG. 4. Details are not described herein again.

S507: The TSCTSF determines the third device and determines the first information based on the subscription information of the UE 1 and the time source capability information.

The third device may be the RAN or the UPF. The first information may include a first type and/or a first clock accuracy. In S507, the TSCTSF may determine the third device and determine the first information based on the subscription information of the UE 1; or determine the third device and determine the first information based on the subscription information of the UE 1 and the time source capability information; or determine the third device and determine the first information based on the subscription information of the UE 1 and the first message; or determine the third device and determine the first information based on the subscription information of the UE 1, the time source capability information, and the first message. For details, refer to the descriptions in S402. Details are not described herein again. In FIG. 5A and FIG. 5B, an example in which the TSCTSF determines the third device and determines the first information based on the subscription information of the UE 1 and the time source capability information is used.

In S507, if the TSCTSF determines that the RAN provides the time synchronization service for the UE 1, S508 and S509 are performed; or if the TSCTSF determines that the UPF provides the time synchronization service for the UE 1, S510 and S511 are performed.

S508: The TSCTSF sends first information to the RAN, and correspondingly, the RAN receives the first information.

If the TSCTSF selects the RAN to provide the time synchronization service for the UE 1, the TSCTSF may send the first information to the RAN, for example, carry the first information in a session establishment request message and send the session establishment request message to the RAN. For a specific implementation process of S508, refer to the content in S404. Details are not described herein again.

S509: The RAN provides the time synchronization service for the UE 1 based on the first information.

For example, the RAN generates a time synchronization packet based on the first information, and sends the time synchronization packet to the UE 1 by using an air interface mechanism, to implement time synchronization of the UE 1. Optionally, after receiving the time synchronization packet, the UE 1 may send the time synchronization packet to a UE 2 (not shown in FIG. 5A and FIG. 5B), to implement time synchronization of the UE 2. If the UE 1 does not include a DS-TT, the RAN sends the time synchronization packet to the UE 1 by using the air interface mechanism. After receiving the time synchronization packet, the UE 1 forwards the time synchronization packet to the DS-TT, and then the DS-TT forwards the time synchronization packet to the UE 2. For a specific implementation process of S509, refer to the content in S405. Details are not described herein again.

S510: The TSCTSF sends first information to the UPF, and correspondingly, the UPF receives the first information.

If the TSCTSF selects the UPF to provide the time synchronization service for the UE 1, the TSCTSF may send the first information to the UPF, for example, carry the first information in first information and send the first information to the UPF. For a specific implementation process of S510, refer to the content in S404. Details are not described herein again.

S511: The UPF provides the time synchronization service for the UE 1 based on the first information.

For example, the UPF generates a time synchronization packet based on the first information, and sends the time synchronization packet to the UE 1, to implement time synchronization of the UE 1. Optionally, after receiving the time synchronization packet, the UE 1 may send the time synchronization packet to a UE 2, to implement time synchronization of the UE 2. If the UE 1 does not include a DS-TT, the UPF sends the time synchronization packet to the UE 1. After receiving the time synchronization packet, the UE 1 forwards the time synchronization packet to the DS-TT, and then the DS-TT forwards the time synchronization packet to the UE 2. In addition, an NW-TT in the UPF may send the time synchronization packet to the DS-TT without using the UE 1, and then the DS-TT forwards the time synchronization packet to the UE 2. For a specific implementation process of S511, refer to the content in S405. Details are not described herein again.

In this case, the RAN or the UPF can provide the time synchronization service for the UE 1 based on the first information determined by the TSCTSF based on the subscription information of the UE 1. The following S512 to S518 are optional steps.

S512: The TSCTSF sends the first information to the PCF, and correspondingly, the PCF receives the first information.

The first information may be used for the PCF to provide a charging policy for the time synchronization service.

S513: The PCF provides the charging policy for the time synchronization service based on the first information.

S514: The AF sends a second message to the TSCTSF, and correspondingly, the TSCTSF receives the second message.

The second message is for requesting to stop providing the time synchronization service for the UE 1. For example, the AF may determine, based on the slice information, the service requirement, and the like of the UE 1, that the UE 1 does not have the requirement for the 5GS to provide the time synchronization service, and may send the second message to the TSCTSF.

In S507, if the TSCTSF determines that the RAN provides the time synchronization service for the UE 1, S515 and S516 are subsequently performed; or if the TSCTSF determines that the UPF provides the time synchronization service for the UE 1, S517 and S518 are subsequently performed.

S515: The TSCTSF sends a third message to the RAN, and correspondingly, the RAN receives the third message.

The third message indicates to stop providing the time synchronization service for the UE 1.

S516: The RAN stops, based on the third message, providing the time synchronization service for the UE 1.

S517: The TSCTSF sends a third message to the UPF, and correspondingly, the UPF receives the third message.

S518: The UPF stops, based on the third message, providing the time synchronization service for the UE 1.

For a specific implementation process of S515 to S518, refer to the related content in FIG. 4. Details are not described herein again.

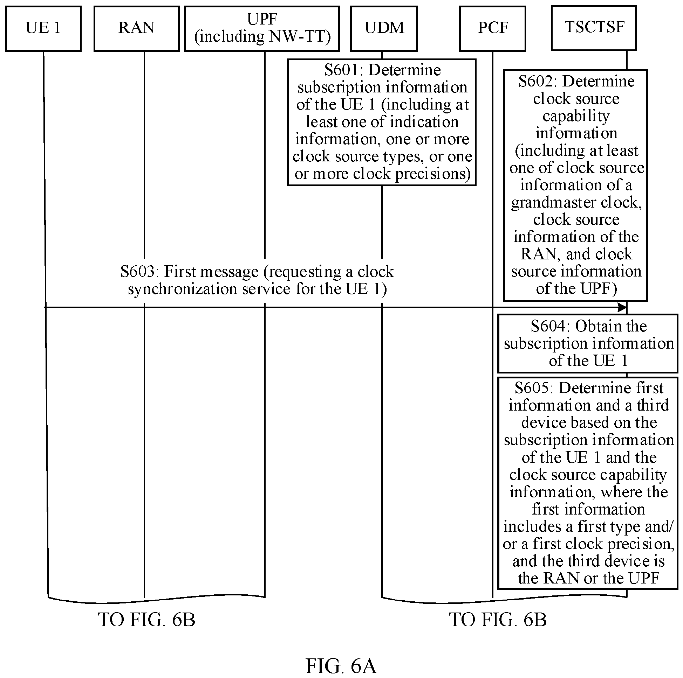

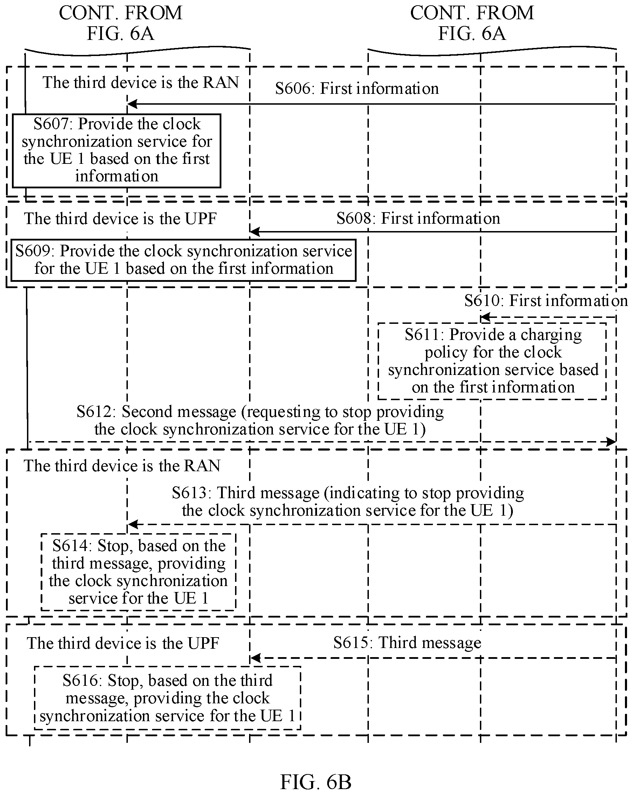

FIG. 5A and FIG. 5B describe the procedure shown in FIG. 4 from the perspective in which the second device is the AF. The following describes, with reference to FIG. 6A and FIG. 6B, the procedure shown in FIG. 4 from the perspective in which the second device is the UE 1.

FIG. 6A and FIG. 6B are another flowchart of a communication method according to an embodiment of this application. In the procedure shown in FIG. 6A and FIG. 6B, the second device is the UE 1. S601, S602, S604 to S611, and S613 to S616 are respectively the same as S501, S502, S506 to S513, and S515 to S518 in FIG. 5A and FIG. 5B. A difference lies in that:

S603: The UE 1 sends a first message to the TSCTSF, and correspondingly, the TSCTSF receives the first message.

The first message is for requesting the time synchronization service for the UE 1, for example, requesting the 5GS to provide the time synchronization service for the UE 1. For example, the UE 1 determines, based on slice information, a service requirement, and the like, that the UE 1 has a requirement for the 5GS to provide the time synchronization service, and sends the first message to the TSCTSF based on the requirement.

Optionally, the UE 1 may receive the first message from a UE 2 (not shown in FIG. 6A and FIG. 6B). In this case, the first message may be used for requesting the time synchronization service for the UE 2, for example, requesting the 5GS to provide the time synchronization service for the UE 2. For example, the UE 2 may determine, based on a service requirement and the like, that the UE 2 has a requirement for the 5GS to provide the time synchronization service, and send the first message to the UE 1 based on the requirement. After receiving the first message, the UE 1 forwards the first message to the TSCTSF. If the UE 1 does not include a DS-TT, the UE 2 may send the first message to the DS-TT, the DS-TT forwards the first message to the UE 1, and then the UE 1 forwards the first message to the TSCTSF.

For a specific implementation process of S603, refer to the related descriptions in S401. Details are not described herein again.

S612: The UE 1 sends a second message to the TSCTSF, and correspondingly, the TSCTSF receives the second message.

The second message is for requesting to stop providing the time synchronization service for the UE 1. For example, the UE 1 may determine, based on slice information, a service requirement, and the like, that the UE 1 does not have the requirement for the 5GS to provide the time synchronization service, and send the second message to the TSCTSF.

Optionally, the UE 1 may receive the second message from the UE 2. In this case, the second message may be used for requesting to stop providing the time synchronization service for the UE 2, for example, requesting the 5GS to stop providing the time synchronization service for the UE 2. For example, the UE 2 may determine, based on the service requirement and the like, that the UE 2 does not have the requirement for the 5GS to provide the time synchronization service, and send the second message to the UE 1. After receiving the second message, the UE 1 forwards the second message to the TSCTSF. If the UE 1 does not include a DS-TT, the UE 2 may send the second message to the DS-TT, the DS-TT forwards the second message to the UE 1, and then the UE 1 forwards the second message to the TSCTSF.

It may be understood that, to implement functions in the foregoing embodiments, the base station and the terminal device include corresponding hardware structures and/or software modules for performing various functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

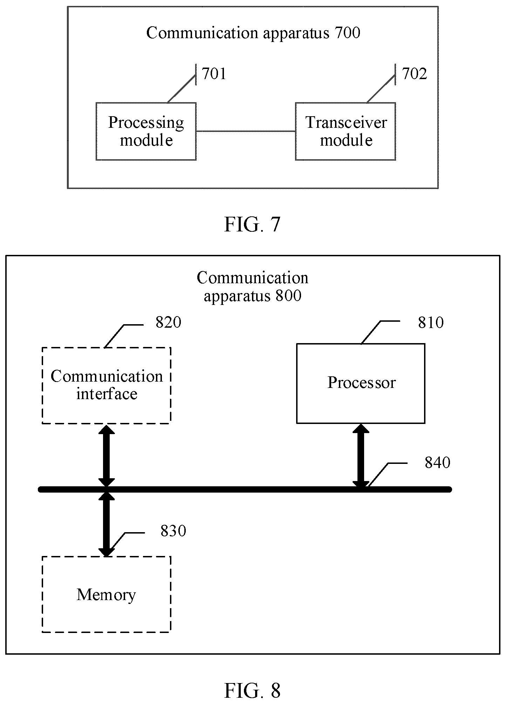

FIG. 7 and FIG. 8 are schematic diagrams of structures of possible communication apparatuses according to embodiments of this application. The communication apparatus may also be referred to as a signal transmission apparatus. These communication apparatuses may be configured to implement functions of the terminal device or the base station in the foregoing method embodiments, and therefore may also implement beneficial effects of the foregoing method embodiments.

As shown in FIG. 7, a communication apparatus 700 includes a processing module 701 and a transceiver module 702. The communication apparatus 700 is configured to implement the function of the first device, the second device, or the third device in the method embodiment shown in FIG. 4, FIG. 5A and FIG. 5B, or FIG. 6A and FIG. 6B. For example, the communication apparatus 700 may be the first device in the foregoing embodiments, or the second device in the foregoing embodiments, or the third device in the foregoing embodiments. Alternatively, the communication apparatus 700 may be a component or a functional module (for example, a baseband apparatus or a chip system) in the first device in the foregoing embodiments, or a component or a functional module (for example, a baseband apparatus or a chip system) in the second device in the foregoing embodiments, or a component or a functional module (for example, a baseband apparatus or a chip system) in the third device in the foregoing embodiments. Alternatively, the communication apparatus 700 may be a larger device including the first device in the foregoing embodiments, or a larger device including the second device in the foregoing embodiments, or a larger device including the third device in the foregoing embodiments.

The transceiver module 702 can implement a sending function and a receiving function. When the transceiver module 702 implements the sending function, the transceiver module 702 may be referred to as a sending module (also referred to as a sending unit sometimes). When the transceiver module 702 implements the receiving function, the transceiver module 702 may be referred to as a receiving module (also referred to as a receiving unit sometimes). The sending module and the receiving module may be a same functional module, the functional module is referred to as the transceiver module 702, and the functional module can implement the sending function and the receiving function. Alternatively, the sending module and the receiving module may be different functional modules, and the transceiver module is a general term for these functional modules. The processing module 701 can implement the function of any one of the first device, the second device, or the third device in the foregoing embodiments.

In an example, the communication apparatus 700 is configured to implement the function of the first device in the foregoing embodiments. Optionally, the first device is a TSCTSF.

The transceiver module 702 is configured to receive a first message from a second device, where the first message is for requesting a time synchronization service for a terminal device.

The processing module 701 is configured to: determine first information based on subscription information of the terminal device, and determine a third device configured to provide the time synchronization service, where the subscription information includes at least one of indication information, one or more types of time source, or one or more clock accuracies, the indication information indicates that the terminal device supports the time synchronization service, the first information includes a first type and/or a first clock accuracy, the one or more types include the first type, and the one or more clock accuracies include the first clock accuracy.

The transceiver module 702 is further configured to send the first information to the third device, where the first information is reference information of the time synchronization service.

In an optional implementation, the first message may include second information, the second information is requested information about the time synchronization service, the second information includes the first type and/or the first clock accuracy; and when determining first information based on subscription information of the terminal device, and determining a third device configured to provide the time synchronization service, the processing module 701 may be specifically configured to determine the third device and determine the first information based on the subscription information and the second information.

In an optional implementation, when determining first information based on subscription information of the terminal device, and determining a third device configured to provide the time synchronization service, the processing module 701 may be specifically configured to determine the third device and determine the first information based on the subscription information and time source capability information, where the time source capability information includes at least one of the following information: a type of time source and/or a clock accuracy corresponding to a grandmaster clock, a type of time source and/or a clock accuracy supported by an access network device, or a type of time source and/or a clock accuracy supported by a user plane function device.

In an optional implementation, the transceiver module 702 is further configured to: send a first request message to a unified data management device, where the first request message is for requesting the subscription information; and receive a first response message from the unified data management device, where the first response message includes the subscription information.

In an optional implementation, the transceiver module 702 is further configured to send the first information to a policy control function device.

In an optional implementation, the transceiver module 702 is further configured to: receive a second message from the second device, where the second message is for requesting to stop the time synchronization service; and send a third message to the third device, where the third message indicates to stop the time synchronization service.

In an optional implementation, the transceiver module 702 is further configured to: receive a second request message from an application function device, where the second request message is for requesting the time source capability information; and send a second response message to the application function device, where the second response message includes the time source capability information. The time source capability information includes at least one of the following information: the type of time source and/or the clock accuracy corresponding to the grandmaster clock, the type of time source and/or the clock accuracy supported by the access network device, or the type of time source and/or the clock accuracy supported by the user plane function device.

In an optional implementation, the subscription information further includes first clock holdover capability information to which the terminal device subscribes, and the first information further includes the first clock holdover capability information; or the subscription information further includes first coordinated universal time divergence capability information to which the terminal device subscribes, and the first information further includes the first coordinated universal time divergence capability information. The first clock holdover capability information indicates that, when a first time source is unavailable, the terminal device supports receiving a time synchronization service of a second time source in first duration. The first coordinated universal time divergence capability information indicates that, when the first time source cannot provide a time source tracing service, the terminal device supports receiving a time synchronization service with a divergence from coordinated universal time provided by a third time source in second duration. The first time source is a time source configured for the terminal device, and the second time source and the third time source are time sources in a communication system in which the first device is located.

In an optional implementation, the transceiver module 702 is further configured to send the first information to the second device.

In another example, the communication apparatus 700 is configured to implement the function of the second device in the foregoing embodiments. Optionally, the second device is an AF or a UE 1.

The transceiver module 702 is configured to: send a first message to a first device, where the first message is for requesting a time synchronization service for the terminal device; and receive first information from the first device, where the first information is reference information of the time synchronization service, the first information includes a first type and/or a first clock accuracy, the first information is information determined based on subscription information of the terminal device, the subscription information includes at least one of indication information, one or more types of time source, or one or more clock accuracies, the indication information indicates that the terminal device supports the time synchronization service, the one or more types include the first type, and the one or more clock accuracies include the first clock accuracy.

In an optional implementation, the first message includes second information, the second information is requested information about the time synchronization service, the second information includes the first type and/or the first clock accuracy, and the first information is information determined based on the subscription information and the second information.

In an optional implementation, the first information is information determined based on the subscription information and time source capability information, the time source capability information includes at least one of the following information: a type of time source and/or a clock accuracy corresponding to a grandmaster clock, a type of time source and/or a clock accuracy supported by an access network device, or a type of time source and/or a clock accuracy supported by a user plane function device.

In an optional implementation, the transceiver module 702 is further configured to send a second message to the first device, where the second message is for requesting to stop the time synchronization service.

In an optional implementation, the transceiver module 702 is further configured to: send a second request message to the first device, where the second request message is for requesting the time source capability information; and receive a second response message from the first device, where the second response message includes the time source capability information. The time source capability information includes at least one of the following information: the type of time source and/or the clock accuracy corresponding to the grandmaster clock, the type of time source and/or the clock accuracy supported by the access network device, or the type of time source and/or the clock accuracy supported by the user plane function device.

In an optional implementation, the subscription information further includes first clock holdover capability information to which the terminal device subscribes, and the first information further includes the first clock holdover capability information; or the subscription information further includes first coordinated universal time divergence capability information to which the terminal device subscribes, and the first information further includes the first coordinated universal time divergence capability information. The first clock holdover capability information indicates that, when a first time source is unavailable, the terminal device supports receiving a time synchronization service of a second time source in first duration. The first coordinated universal time divergence capability information indicates that, when the first time source cannot provide a time source tracing service, the terminal device supports receiving a time synchronization service with a divergence from coordinated universal time provided by a third time source in second duration. The first time source is a time source configured for the terminal device, and the second time source and the third time source are time sources in a communication system in which the first device is located.

In still another example, the communication apparatus 700 is configured to implement the function of the third device in the foregoing embodiments. Optionally, the third device is a RAN or a UPF.

The transceiver module 702 is configured to receive first information from a first device, where the first information includes a first type and/or a first clock accuracy, the first information is information determined based on subscription information of a terminal device, the subscription information includes at least one of indication information, one or more types of time source, or one or more clock accuracies, the indication information indicates that the terminal device supports a time synchronization service, the one or more types include the first type, and the one or more clock accuracies include the first clock accuracy.

The processing module 701 is configured to provide the time synchronization service for the terminal device based on the first information.

In an optional implementation, the first information is information determined based on the subscription information and second information, the second information is requested information about the time synchronization service, and the second information includes the first type and/or the first clock accuracy.

In an optional implementation, the first information is information determined based on the subscription information and time source capability information, the time source capability information includes at least one of the following information: a type of time source and/or a clock accuracy corresponding to a grandmaster clock, a type of time source and/or a clock accuracy supported by an access network device, or a type of time source and/or a clock accuracy supported by a user plane function device.

In an optional implementation, the transceiver module 702 is further configured to receive a third message sent by the first device; and the processing module 701 is further configured to stop the time synchronization service based on the third message.

In an optional implementation, the subscription information further includes first clock holdover capability information to which the terminal device subscribes, and the first information further includes the first clock holdover capability information; or the subscription information further includes first coordinated universal time divergence capability information to which the terminal device subscribes, and the first information further includes the first coordinated universal time divergence capability information. The first clock holdover capability information indicates that, when a first time source is unavailable, the terminal device supports receiving a time synchronization service of a second time source in first duration. The first coordinated universal time divergence capability information indicates that, when the first time source cannot provide a time source tracing service, the terminal device supports receiving a time synchronization service with a divergence from coordinated universal time provided by a third time source in second duration. The first time source is a time source configured for the terminal device, and the second time source and the third time source are time sources in a communication system in which the first device is located.

For more detailed descriptions of the processing module 701 and the transceiver module 702, directly refer to the related descriptions in the method embodiment shown in FIG. 4, FIG. 5A and FIG. 5B, or FIG. 6A and FIG. 6B. Details are not described herein again.

As shown in FIG. 8, a communication apparatus 800 includes a processor 810. Optionally, the communication apparatus 800 may further include a communication interface 820 (represented by a dashed line in FIG. 8). The processor 810 and the communication interface 820 are coupled to each other. It may be understood that the communication interface 820 may be a transceiver or an input/output interface. Optionally, the communication apparatus 800 may further include a memory 830 (represented by a dashed line in FIG. 8), configured to: store instructions executed by the processor 810, store input data required by the processor 810 to run instructions, or store data generated after the processor 810 runs instructions. Optionally, the memory 830, the processor 810, and the communication interface 820 are connected through a bus 840. In this embodiment of this application, the instructions may alternatively be a computer program, code, program code, a program, an application program, software, or an executable file.

When the communication apparatus 800 is configured to implement the method shown in FIG. 4, FIG. 5A and FIG. 5B, or FIG. 6A and FIG. 6B, the processor 810 is configured to implement the function of the processing module 701, and communication interface 820 is configured to implement the function of the transceiver module 702.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by a network device to the terminal device; or the chip in the terminal device sends information to another module (for example, a radio frequency module or an antenna) in the terminal device, where the information is sent by the terminal device to a network device.

When the communication apparatus is a module used in a network device, the module in the network device implements the function of the network device in the foregoing method embodiments. The module in the network device receives information from another module (for example, a radio frequency module or an antenna) in the network device, where the information is sent by a terminal device to the network device; or the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or a design of any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium, and can write information into the storage medium. It is clear that the storage medium may alternatively be a component of the processor. The processor and the storage medium may be disposed in an ASIC. In addition, the ASIC may be located in a network device or a terminal device. It is clear that the processor and the storage medium may alternatively exist in the network device or the terminal device as discrete components.

This application further provides a computer-readable storage medium. The computer-readable storage medium stores a computer program or instructions. When the computer program or the instructions are run, the method performed by the first device, the second device, or the third device in the foregoing method embodiments is implemented. In this way, the functions in the foregoing embodiments can be implemented in a form of a software functional unit and sold or used as an independent product. Based on such an understanding, the technical solutions of this application essentially, or a contributing part, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory ROM, a random access memory RAM, a magnetic disk, or an optical disc.

This application further provides a computer program product. The computer program product includes computer program code. When the computer program code is run on a computer, the computer is enabled to perform the method performed by the first device, the second device, or the third device in any one of the foregoing method embodiments.

This application further provides a system. The system includes a first device and a third device.

An embodiment of this application further provides a processing apparatus, including a processor and an interface. The processor is configured to perform the method performed by the first device, the second device, or the third device in any one of the foregoing method embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field programmable gate array (field programmable gate array, FPGA) or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or a storage medium of any other form in the art. For example, the storage medium may connect to a processor so that the processor can read information from the storage medium, and can write information to the storage medium. Optionally, the storage medium may alternatively be integrated into a processor. The processor and the storage medium may be disposed in an ASIC, and the ASIC may be disposed in a terminal device. Optionally, the processor and the storage medium may alternatively be disposed in different components in the terminal device.

These computer program instructions may alternatively be loaded onto a computer or another programmable data processing device, so that a series of operation steps are performed on the computer or the another programmable device to generate computer-implemented processing, and instructions executed on the computer or the another programmable device provide steps for implementing a function specified in one or more procedures in the flowchart and/or one or more blocks in the block diagram.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application that are defined by the appended claims, and are considered to cover any or all of modifications, variations, combinations, or equivalents in the scope of embodiments of this application. It is clear that, a person skilled in the art can make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, wherein the method comprises:
receiving, by a first device, a first message from a second device, wherein the first message is for requesting a time synchronization service for a terminal device;
determining, by the first device, first information based on subscription information of the terminal device, and a third device configured to provide the time synchronization service, wherein the subscription information comprises at least one of indication information, one or more types of time source, or one or more clock accuracies, the indication information indicates that the terminal device supports the time synchronization service, the first information comprises a first type and/or a first clock accuracy, the one or more types comprise the first type, and the one or more clock accuracies comprise the first clock accuracy; and
sending, by the first device, the first information to the third device, wherein the first information is reference information of the time synchronization service.

2. The method according to claim 1, wherein the first message comprises second information, the second information is requested information about the time synchronization service, and the second information comprises the first type and/or the first clock accuracy; and
the determining, by the first device, first information based on subscription information of the terminal device, and a third device configured to provide the time synchronization service comprises:
determining, by the first device, the first information based on the subscription information and the second information, and the third device.

3. The method according to claim 1 or 2, wherein the determining, by the first device, first information based on subscription information of the terminal device and a third device configured to provide the time synchronization service comprises:
determining, by the first device, the first information based on the subscription information and time source capability information, and the third device, wherein the time source capability information comprises at least one of the following information: a type of time source and/or a clock accuracy corresponding to a grandmaster clock, a type of time source and/or a clock accuracy supported by an access network device, or a type of time source and/or a clock accuracy supported by a user plane function device.

4. The method according to any one of claims 1 to 3, wherein the method further comprises:
sending, by the first device, a first request message to a unified data management device, wherein the first request message is for requesting the subscription information; and
receiving, by the first device, a first response message from the unified data management device, wherein the first response message comprises the subscription information.

5. The method according to any one of claims 1 to 4, wherein the method further comprises:
sending, by the first device, the first information to a policy control function device.

6. The method according to any one of claims 1 to 5, wherein the method further comprises:
receiving, by the first device, a second message from the second device, wherein the second message is for requesting to stop the time synchronization service; and
sending, by the first device, a third message to the third device, wherein the third message indicates to stop the time synchronization service.

7. The method according to any one of claims 1 to 6, wherein the method further comprises:
receiving, by the first device, a second request message from an application function device, wherein the second request message is for requesting the time source capability information; and
sending, by the first device, a second response message to the application function device, wherein the second response message comprises the time source capability information, wherein
the time source capability information comprises at least one of the following information: a type of time source and/or a clock accuracy corresponding to a grandmaster clock, a type of time source and/or a clock accuracy supported by an access network device, or a type of time source and/or a clock accuracy supported by a user plane function device.

8. The method according to any one of claims 1 to 7, wherein
the subscription information further comprises first clock holdover capability information to which the terminal device subscribes, and the first information further comprises the first clock holdover capability information; or
the subscription information further comprises first coordinated universal time divergence capability information to which the terminal device subscribes, and the first information further comprises the first coordinated universal time divergence capability information, wherein
the first clock holdover capability information indicates that, when a first time source is unavailable, the terminal device supports receiving a time synchronization service of a second time source in first duration; and the first coordinated universal time divergence capability information indicates that, when the first time source cannot provide a time source tracing service, the terminal device supports receiving a time synchronization service with a divergence from coordinated universal time provided by a third time source in second duration, wherein the first time source is a time source configured for the terminal device, and the second time source and the third time source are time sources in a communication system in which the first device is located.

9. The method according to any one of claims 1 to 8, wherein the method further comprises:
sending, by the first device, the first information to the second device.

10. A communication method, applied to an application function device or a terminal device, wherein the method comprises:
sending a first message to a first device, wherein the first message is for requesting a time synchronization service for the terminal device; and
receiving first information from the first device, wherein the first information is reference information of the time synchronization service, the first information comprises a first type and/or a first clock accuracy, the first information is information determined based on subscription information of the terminal device, the subscription information comprises at least one of indication information, one or more types of time source, or one or more clock accuracies, the indication information indicates that the terminal device supports the time synchronization service, the one or more types comprise the first type, and the one or more clock accuracies comprise the first clock accuracy.

11. The method according to claim 10, wherein
the first message comprises second information, the second information is requested information about the time synchronization service, the second information comprises the first type and/or the first clock accuracy, and the first information is information determined based on the subscription information and the second information.

12. The method according to claim 10 or 11, wherein
the first information is information determined based on the subscription information and time source capability information, the time source capability information comprises at least one of the following information: a type of time source and/or a clock accuracy corresponding to a grandmaster clock, a type of time source and/or a clock accuracy supported by an access network device, or a type of time source and/or a clock accuracy supported by a user plane function device.

13. The method according to any one of claims 10 to 12, wherein the method further comprises:
sending a second message to the first device, wherein the second message is for requesting to stop the time synchronization service.

14. The method according to any one of claims 10 to 13, wherein the method further comprises:
sending a second request message to the first device, wherein the second request message is for requesting the time source capability information; and
receiving a second response message from the first device, wherein the second response message comprises the time source capability information, wherein
the time source capability information comprises at least one of the following information: a type of time source and/or a clock accuracy corresponding to a grandmaster clock, a type of time source and/or a clock accuracy supported by an access network device, or a type of time source and/or a clock accuracy supported by a user plane function device.

15. The method according to any one of claims 10 to 13, wherein
the subscription information further comprises first clock holdover capability information to which the terminal device subscribes, and the first information further comprises the first clock holdover capability information; or
the subscription information further comprises first coordinated universal time divergence capability information to which the terminal device subscribes, and the first information further comprises the first coordinated universal time divergence capability information, wherein
the first clock holdover capability information indicates that, when a first time source is unavailable, the terminal device supports receiving a time synchronization service of a second time source in first duration; and the first coordinated universal time divergence capability information indicates that, when the first time source cannot provide a time source tracing service, the terminal device supports receiving a time synchronization service with a divergence from coordinated universal time provided by a third time source in second duration, wherein the first time source is a time source configured for the terminal device, and the second time source and the third time source are time sources in a communication system in which the first device is located.

16. A communication method, applied to an access network device or a user plane function device, wherein the method comprises:
receiving first information from a first device, wherein the first information comprises a first type and/or a first clock accuracy, the first information is information determined based on subscription information of a terminal device, the subscription information comprises at least one of indication information, one or more types of time source, or one or more clock accuracies, the indication information indicates that the terminal device supports a time synchronization service, the one or more types comprise the first type, and the one or more clock accuracies comprise the first clock accuracy; and
providing the time synchronization service for the terminal device based on the first information.

17. The method according to claim 16, wherein
the first information is information determined based on the subscription information and second information, the second information is requested information about the time synchronization service, and the second information comprises the first type and/or the first clock accuracy.

18. The method according to claim 16 or 17, wherein
the first information is information determined based on the subscription information and time source capability information, the time source capability information comprises at least one of the following information: a type of time source and/or a clock accuracy corresponding to a grandmaster clock, a type of time source and/or a clock accuracy supported by the access network device, or a type of time source and/or a clock accuracy supported by a user plane function device.

19. The method according to any one of claims 16 to 18, wherein the method further comprises:
receiving a third message sent by the first device; and
stopping the time synchronization service based on the third message.

20. The method according to any one of claims 16 to 19, wherein
the subscription information further comprises first clock holdover capability information to which the terminal device subscribes, and the first information further comprises the first clock holdover capability information; or
the subscription information further comprises first coordinated universal time divergence capability information to which the terminal device subscribes, and the first information further comprises the first coordinated universal time divergence capability information, wherein
the time source capability information comprises at least one of the following information: a type of time source and/or a clock accuracy corresponding to a grandmaster clock, a type of time source and/or a clock accuracy supported by an access network device, or a type of time source and/or a clock accuracy supported by a user plane function device.

21. A communication apparatus, comprising a processing module and a transceiver module, wherein
the transceiver module is configured to receive a first message from a second device, wherein the first message is for requesting a time synchronization service for a terminal device;
the processing module is configured to: determine first information based on subscription information of the terminal device, and determine a third device configured to provide the time synchronization service, wherein the subscription information comprises at least one of indication information, one or more types of time source, or one or more clock accuracies, the indication information indicates that the terminal device supports the time synchronization service, the first information comprises a first type and/or a first clock accuracy, the one or more types comprise the first type, and the one or more clock accuracies comprise the first clock accuracy; and
the transceiver module is further configured to send the first information to the third device, wherein the first information is reference information of the time synchronization service.

22. The communication apparatus according to claim 21, wherein the first message comprises second information, the second information is requested information about the time synchronization service, and the second information comprises the first type and/or the first clock accuracy; and
the processing module is configured to: determine the first information based on the subscription information of the terminal device, and determine the third device configured to provide the time synchronization service in the following manner:
determining the first information based on the subscription information and the second information, and the third device.

23. The communication apparatus according to claim 21 or 22, wherein the processing module is configured to: determine the first information based on the subscription information of the terminal device, and determine the third device configured to provide the time synchronization service in the following manner:
determining the first information based on the subscription information and time source capability information, and the third device, wherein the time source capability information comprises at least one of the following information: a type of time source and/or a clock accuracy corresponding to a grandmaster clock, a type of time source and/or a clock accuracy supported by an access network device, or a type of time source and/or a clock accuracy supported by a user plane function device.

24. The communication apparatus according to any one of claims 21 to 23, wherein
the transceiver module is further configured to: send a first request message to a unified data management device, wherein the first request message is for requesting the subscription information; and receive a first response message from the unified data management device, wherein the first response message comprises the subscription information.

25. The communication apparatus according to any one of claims 21 to 24, wherein
the transceiver module is further configured to send the first information to a policy control function device.

26. The communication apparatus according to any one of claims 21 to 25, wherein
the transceiver module is further configured to: receive a second message from the second device, wherein the second message is for requesting to stop the time synchronization service; and send a third message to the third device, wherein the third message indicates to stop the time synchronization service.

27. The communication apparatus according to any one of claims 21 to 26, wherein
the transceiver module is further configured to: receive a second request message from an application function device, wherein the second request message is for requesting the time source capability information; and send a second response message to the application function device, wherein the second response message comprises the time source capability information; and
the time source capability information comprises at least one of the following information: a type of time source and/or a clock accuracy corresponding to a grandmaster clock, a type of time source and/or a clock accuracy supported by an access network device, or a type of time source and/or a clock accuracy supported by a user plane function device.

28. The communication apparatus according to any one of claims 21 to 27, wherein
the subscription information further comprises first clock holdover capability information to which the terminal device subscribes, and the first information further comprises the first clock holdover capability information; or
the subscription information further comprises first coordinated universal time divergence capability information to which the terminal device subscribes, and the first information further comprises the first coordinated universal time divergence capability information, wherein
the first clock holdover capability information indicates that, when a first time source is unavailable, the terminal device supports receiving a time synchronization service of a second time source in first duration; and the first coordinated universal time divergence capability information indicates that, when the first time source cannot provide a time source tracing service, the terminal device supports receiving a time synchronization service with a divergence from coordinated universal time provided by a third time source in second duration, wherein the first time source is a time source configured for the terminal device, and the second time source and the third time source are time sources in a communication system in which the communication apparatus is located.

29. The communication apparatus according to any one of claims 21 to 28, wherein
the transceiver module is further configured to send the first information to the second device.

30. A communication apparatus, comprising a processing module and a transceiver module, wherein
the transceiver module is under control of the processing module, and is configured to: send a first message to a first device, wherein the first message is for requesting a time synchronization service for a terminal device; and receive first information from the first device, wherein the first information is reference information of the time synchronization service, the first information comprises a first type and/or a first clock accuracy, the first information is information determined based on subscription information of the terminal device, the subscription information comprises at least one of indication information, one or more types of time source, or one or more clock accuracies, the indication information indicates that the terminal device supports the time synchronization service, the one or more types comprise the first type, and the one or more clock accuracies comprise the first clock accuracy.

31. The communication apparatus according to claim 30, wherein
the first message comprises second information, the second information is requested information about the time synchronization service, the second information comprises the first type and/or the first clock accuracy, and the first information is information determined based on the subscription information and the second information.

32. The communication apparatus according to claim 30 or 31, wherein
the first information is information determined based on the subscription information and time source capability information, the time source capability information comprises at least one of the following information: a type of time source and/or a clock accuracy corresponding to a grandmaster clock, a type of time source and/or a clock accuracy supported by an access network device, or a type of time source and/or a clock accuracy supported by a user plane function device.

33. The communication apparatus according to any one of claims 30 to 32, wherein
the transceiver module is further configured to send a second message to the first device, wherein the second message is for requesting to stop the time synchronization service.

34. The communication apparatus according to any one of claims 30 to 33, wherein
the transceiver module is further configured to: send a second request message to the first device, wherein the second request message is for requesting the time source capability information; and receive a second response message from the first device, wherein the second response message comprises the time source capability information; and
the time source capability information comprises at least one of the following information: a type of time source and/or a clock accuracy corresponding to a grandmaster clock, a type of time source and/or a clock accuracy supported by an access network device, or a type of time source and/or a clock accuracy supported by a user plane function device.

35. The communication apparatus according to any one of claims 30 to 33, wherein
the subscription information further comprises first clock holdover capability information to which the terminal device subscribes, and the first information further comprises the first clock holdover capability information; or
the subscription information further comprises first coordinated universal time divergence capability information to which the terminal device subscribes, and the first information further comprises the first coordinated universal time divergence capability information, wherein
the first clock holdover capability information indicates that, when a first time source is unavailable, the terminal device supports receiving a time synchronization service of a second time source in first duration; and the first coordinated universal time divergence capability information indicates that, when the first time source cannot provide a time source tracing service, the terminal device supports receiving a time synchronization service with a divergence from coordinated universal time provided by a third time source in second duration, wherein the first time source is a time source configured for the terminal device, and the second time source and the third time source are time sources in a communication system in which the first device is located.

36. A communication apparatus, comprising a processing module and a transceiver module, wherein
the transceiver module is configured to receive first information from a first device, wherein the first information comprises a first type and/or a first clock accuracy, the first information is information determined based on subscription information of a terminal device, the subscription information comprises at least one of indication information, one or more types of time source, or one or more clock accuracies, the indication information indicates that the terminal device supports a time synchronization service, the one or more types comprise the first type, and the one or more clock accuracies comprise the first clock accuracy; and
the processing module is configured to provide the time synchronization service for the terminal device based on the first information.

37. The communication apparatus according to claim 36, wherein
the first information is information determined based on the subscription information and second information, the second information is requested information about the time synchronization service, and the second information comprises the first type and/or the first clock accuracy.

38. The communication apparatus according to claim 36 or 37, wherein
the first information is information determined based on the subscription information and time source capability information, the time source capability information comprises at least one of the following information: a type of time source and/or a clock accuracy corresponding to a grandmaster clock, a type of time source and/or a clock accuracy supported by an access network device, or a type of time source and/or a clock accuracy supported by a user plane function device.

39. The communication apparatus according to any one of claims 36 to 38, wherein
the transceiver module is further configured to receive a third message sent by the first device; and
the processing module is further configured to stop the time synchronization service based on the third message.

40. The communication apparatus according to any one of claims 36 to 39, wherein
the subscription information further comprises first clock holdover capability information to which the terminal device subscribes, and the first information further comprises the first clock holdover capability information; or
the subscription information further comprises first coordinated universal time divergence capability information to which the terminal device subscribes, and the first information further comprises the first coordinated universal time divergence capability information, wherein
the time source capability information comprises at least one of the following information: a type of time source and/or a clock accuracy corresponding to a grandmaster clock, a type of time source and/or a clock accuracy supported by an access network device, or a type of time source and/or a clock accuracy supported by a user plane function device.

41. A communication apparatus, comprising a processor and a memory, wherein the memory is coupled to the processor, and the processor is configured to perform the method according to any one of claims 1 to 9, the method according to any one of claims 10 to 15, or the method according to any one of claims 16 to 20.

42. A computer-readable storage medium, wherein the computer-readable storage medium is configured to store a computer program, and when the computer program is run on a computer, the computer is enabled to perform the method according to any one of claims 1 to 9, the method according to any one of claims 10 to 15, or the method according to any one of claims 16 to 20.

43. A chip system, wherein the chip system comprises:
a processor and an interface, wherein the processor is configured to invoke instructions from the interface and run the instructions, and when the processor executes the instructions, the method according to any one of claims 1 to 9, the method according to any one of claims 10 to 15, or the method according to any one of claims 16 to 20 is implemented.

44. A computer program product, wherein the computer program product comprises a computer program, and when the computer program is run on a computer, the computer is enabled to perform the method according to any one of claims 1 to 9, the method according to any one of claims 10 to 15, or the method according to any one of claims 16 to 20.

45. A communication system, comprising the communication apparatus according to any one of claims 21 to 29 and the communication apparatus according to any one of claims 36 to 40.
